# EUROPEAN PATENT APPLICATION

(11) **EP 4 610 970 A1**
(43) Date of publication of application: **03.09.2025**
(21) Application number: 23894830.1
(22) Date of filing: 20.10.2023
(51) Int. Cl.: G09G 3/00, G09G 5/14, G09G 5/377, G09G 5/38, G09G 3/20, G02B 27/01

(54) **HEAD MOUNTED DEVICE INCLUDING MULTIPLE DISPLAY PANELS AND OPERATING METHOD THEREOF**

(30) Priority: 23.11.2022 KR 20220158723; 23.12.2022 KR 20220183033
(71) Applicant: Samsung Electronics Co., Ltd., Suwon-si, Gyeonggi-do 16677 (KR)
(72) Inventor: LEE, Jaesung, Suwon-si Gyeonggi-do 16677 (KR); KIM, Seungryeol, Suwon-si Gyeonggi-do 16677 (KR); BAE, Jongkon, Suwon-si Gyeonggi-do 16677 (KR); KIM, Kwangtai, Suwon-si Gyeonggi-do 16677 (KR); YEOM, Donghyun, Suwon-si Gyeonggi-do 16677 (KR)
(74) Representative: Gulde & Partner
(86) International application number: PCT/KR2023/016412
(87) International publication number: WO 2024/111901

(57) **Abstract**

A head mounted device according to an embodiment of the present disclosure may include: a first display panel having a fixed location; a second display panel having a fixed location; a first display driving circuit for driving the first display panel; a second display driving circuit for driving the second display panel; and at least one processor. The at least one processor may be configured to: provide screen input data to the first display driving circuit and the second display driving circuit; acquire a deviation between a screen displayed through the first display panel and a screen displayed through the second display panel, on the basis of the provided screen input data; correct at least a portion of the screen input data input to at least one of the first display driving circuit or the second display driving circuit, on the basis of the acquired deviation; and modify an emission timing of at least one of the first display panel (540) or the second display panel (550), on the basis of the modification of at least a portion of the screen input data.

## Description

### [Technical Field]

The disclosure relates to a technology related to a head mounted device including a plurality of display panels and a method of operating the same.

### [Background Art]

With the advancement of electronic device technology, various types of electronic devices such as mobile communication terminals, personal digital assistants (PDAs), electronic notebooks, smart phones, tablet personal computers (PCs), and wearable devices are widely used. For example, an electronic device may provide virtual reality (VR) allowing users to have a realistic experience in a computer-generated virtual world, augmented reality (AR) adding virtual information (or objects) to the real world, and mixed reality (MR) combining VR and AR.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

A head mounted device according to an embodiment may include a first display panel having a fixed position, a second display panel having a fixed position, a first display driving circuit driving the first display panel, a second display driving circuit driving the second display panel, and at least one processor. The at least one processor may be configured to provide screen input data to the first display driving circuit and the second display driving circuit. The at least one processor may be configured to, based on the provided screen input data, obtain a deviation between a screen displayed through the first display panel and a screen displayed through the second display panel. The at least one processor may be configured to, based on the obtained deviation, modify at least a portion of the screen input data input to at least one of the first display driving circuit or the second display driving circuit. The at least one processor may be configured to, based on the modification of the at least portion of the screen input data, change a light emitting timing of at least one of the first display panel or the second display panel.

A method of operating a head mounted device according to an embodiment of the disclosure may include providing screen input data to a first display driving circuit driving a first display panel and a second display driving circuit driving a second display panel. The method of operating the head mounted device according to an embodiment may include obtaining a deviation between a screen displayed through the first display panel and a screen displayed through the second display panel. The method of operating the head mounted device according to an embodiment may include, based on the obtained deviation, modifying at least a portion of the screen input data input to at least one of the first display driving circuit or the second display driving circuit. The method of operating the head mounted device according to an embodiment may include, based on the modification of the at least portion of the screen input data, changing a light emitting timing of at least one of the first display panel or the second display panel.

A non-transitory computer-readable storage medium storing at least one program according to an embodiment of the disclosure may include, based on execution of an application, providing screen input data to a first display driving circuit driving a first display panel and a second display driving circuit driving a second display panel. The storage medium according to an embodiment may include obtaining a deviation between a screen displayed through the first display panel and a screen displayed through the second display panel. The storage medium according to an embodiment may include, based on the obtained deviation, modifying at least a portion of the screen input data input to at least one of the first display driving circuit or the second display driving circuit. The storage medium according to an embodiment may include, based on the modification of the at least portion of the screen input data, changing a light emitting timing of at least one of the first display panel or the second display panel.

A head mounted device according to an embodiment may include a first display panel having a fixed position, a second display panel having a fixed position, a first display driving circuit driving the first display panel, a second display driving circuit driving the second display panel, and at least one processor. The at least one processor may be configured to provide screen input data to the first display driving circuit and the second display driving circuit. The at least one processor may be configured to, based on the provided screen input data, obtain a deviation between a screen displayed through the first display panel and a screen displayed through the second display panel. The at least one processor may be configured to, based on the obtained deviation, modify at least a portion of the screen input data input to at least one of the first display driving circuit or the second display driving circuit. The at least one processor may be configured to, based on the modification of the at least portion of the screen input data, change a driving timing of at least one of the first display driving circuit or the second display driving circuit.

A method of operating a head mounted device according to an embodiment of the disclosure may include providing screen input data to a first display driving circuit driving a first display panel and a second display driving circuit driving a second display panel. The method of operating the head mounted device according to an embodiment may include obtaining a deviation between a screen displayed through the first display panel and a screen displayed through the second display panel. The method of operating the head mounted device according to an embodiment may include, based on the obtained deviation, modifying at least a portion of the screen input data input to at least one of the first display driving circuit or the second display driving circuit. The method of operating the head mounted device according to an embodiment may include, based on the modification of the at least portion of the screen input data, changing a driving timing of at least one of the first display driving circuit or the second display driving circuit.

A non-transitory computer-readable storage medium storing at least one program according to an embodiment of the disclosure may include, based on execution of an application, providing screen input data to a first display driving circuit driving a first display panel and a second display driving circuit driving a second display panel. The storage medium according to an embodiment may include obtaining a deviation between a screen displayed through the first display panel and a screen displayed through the second display panel. The storage medium according to an embodiment may include, based on the obtained deviation, modifying at least a portion of the screen input data input to at least one of the first display driving circuit or the second display driving circuit. The storage medium according to an embodiment may include, based on the modification of the at least portion of the screen input data, changing a driving timing of at least one of the first display driving circuit or the second display driving circuit.

### [Brief Description of Drawings]

FIG. 1 is a block diagram illustrating an electronic device in a network environment according to an embodiment of the disclosure.
FIG. 2 is a perspective view illustrating internal components of a wearable electronic device according to an embodiment of the disclosure.
FIGS. 3A and 3B are diagrams illustrating the front and rear surfaces of a wearable electronic device 300 according to an embodiment.
FIG. 4 is a block diagram illustrating a display module according to an embodiment of the disclosure.
FIG. 5 is a block diagram illustrating a head mounted device according to an embodiment of the disclosure.
FIGS. 6A, 6B, and 6C are detailed block diagrams illustrating a head mounted device according to a first embodiment.
FIGS. 7A, 7B, and 7C are detailed block diagrams illustrating a head mounted device according to a second embodiment.
FIG. 8 is a schematic diagram illustrating a head mounted device displaying a screen according to an embodiment of the disclosure.
FIG. 9A illustrates binocular disparities between the left and right eyes according to depths according to an embodiment of the disclosure.
FIG. 9B is a schematic diagram illustrating depth perception according to image acquisition of the left and right eyes according to an embodiment of the disclosure.
FIG. 10A illustrates a positional deviation on a plane between a screen displayed on a first display panel and a screen displayed on a second display panel according to an embodiment of the disclosure.
FIG. 10B illustrates a screen displayed on a second display panel, which is moved in parallel on a plane according to an embodiment of the disclosure.
FIG. 10C illustrates a tearing screen based on parallel movement of a screen displayed on a second display panel according to an embodiment of the disclosure.
FIG. 11A illustrates a timing of a vertical synchronization signal or screen input data for at least one of a first display driving circuit or a second display driving circuit based on parallel movement of a screen according to an embodiment of the disclosure.
FIG. 11B illustrates a timing of a display period for at least one of a first display driving circuit or a second display driving circuit based on parallel movement of a screen according to an embodiment of the disclosure.
FIG. 11C illustrates an embodiment of changing light emitting timings of a first display panel and a second display panel based on parallel movement of a screen according to an embodiment of the disclosure. FIG. 12A illustrates a size deviation between a screen displayed on a first display panel and a screen displayed on a second display panel according to an embodiment of the disclosure.
FIG. 12B illustrates enlargement or reduction of a screen displayed on a second display panel according to an embodiment of the disclosure.
FIG. 12C illustrates a tearing screen based on enlargement or reduction of a screen displayed on a second display panel according to an embodiment of the disclosure.
FIG. 13A illustrates a timing of a vertical synchronization signal or screen input data for at least one of a first display driving circuit or a second display driving circuit based on enlargement or reduction of a screen according to an embodiment of the disclosure.
FIG. 13B illustrates an embodiment of changing a light emitting timing of a first display panel or a second display panel based on enlargement or reduction of a screen according to an embodiment of the disclosure.
FIG. 14A illustrates a rotational deviation between a screen displayed on a first display panel and a screen displayed on a second display panel according to an embodiment of the disclosure.
FIG. 14B illustrates rotation of a screen displayed on a second display panel according to an embodiment of the disclosure.
FIG. 15A illustrates a rotational deviation between a screen displayed on a first display panel and a screen displayed on a second display panel according to an embodiment of the disclosure.
FIG. 15B illustrates an example of perspective transformation according to an embodiment of the disclosure.
FIG. 16 illustrates a positional deviation, a size deviation, and a rotational deviation between a screen displayed on a first display panel and a screen displayed on a second display panel according to an embodiment of the disclosure.
FIG. 17 illustrates sub-pixel rendering based on arrangement of sub-pixels according to an embodiment of the disclosure.
FIG. 18 is a flowchart illustrating a method of operating a head mounted device according to an embodiment of the disclosure.

### [Mode for Carrying out the Invention]

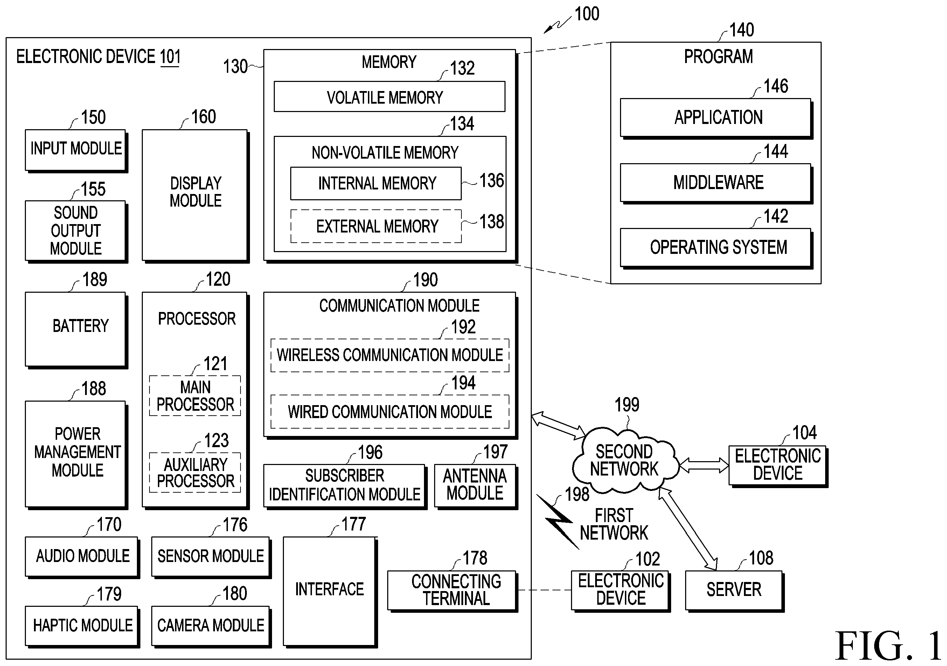

FIG. 1 is a block diagram illustrating an electronic device 101 in a network environment 100 according to embodiments of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

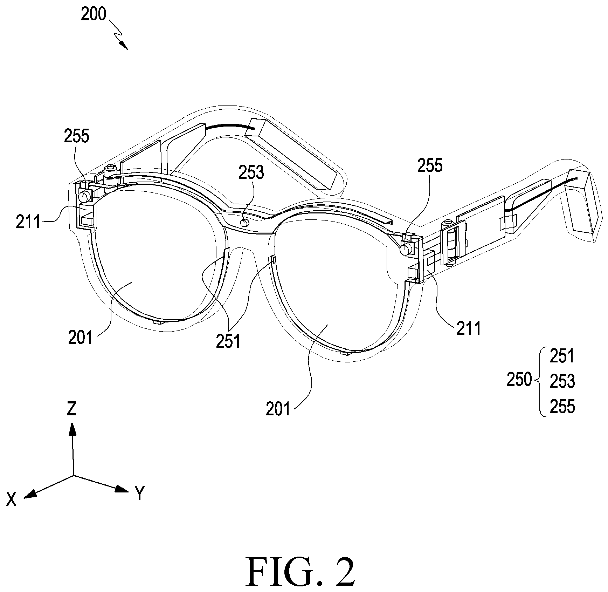

FIG. 2 is a perspective view illustrating internal components of a wearable electronic device 200 according to an embodiment of the disclosure.

Referring to FIG. 2, the wearable electronic device 200 according to an embodiment of the disclosure may include at least one of a light output module 211, a display member 201, and a camera module 250.

According to an embodiment of the disclosure, the light output module 211 may include a light source capable of outputting an image, and a lens that guides the image to the display member 201. According to an embodiment of the disclosure, the light output module 211 may include at least one of a liquid crystal display (LCD), a digital mirror device (DMD), a liquid crystal on silicon (LCoS), a light emitting diode (LED) on silicon (LEDoS), an organic light emitting diode (OLED), or a micro LED.

According to an embodiment of the disclosure, the display member 201 may include an optical waveguide (e.g., a waveguide). According to an embodiment of the disclosure, an output image of the light output module 211 incident on one end of the optical waveguide may be propagated through the optical waveguide and provided to a user. According to an embodiment of the disclosure, the optical waveguide may include at least one of a diffractive element (e.g., a diffractive optical element (DOE) or a holographic optical element (HOE)) or a reflective element (e.g., a reflective mirror). For example, the optical waveguide may guide the output image of the light output module 211 to the user's eye by using at least one diffractive element or reflective element.

According to an embodiment of the disclosure, the camera module 250 may capture a still image and/or a video. According to an embodiment, the camera module 250 may be disposed within a lens frame and disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information (e.g., trajectory information) related to the trajectory of the user's eye or gaze to a processor (e.g., the processor 120 of FIG. 1).

According to an embodiment of the disclosure, a second camera module 253 may capture an external image.

According to an embodiment of the disclosure, a third camera module 255 may be used for hand detection and tracking, and user gesture (e.g., hand movement) recognition. The third camera module 255 according to an embodiment of the disclosure may be used for 3 degrees of freedom (3DoF) or 6DoF head tracking, location (space or environment) recognition, and/or movement recognition. The second camera module 253 may also be used for hand detection and tracking, and user gesture recognition according to an embodiment of the disclosure. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an IR sensor, and/or a photodiode.

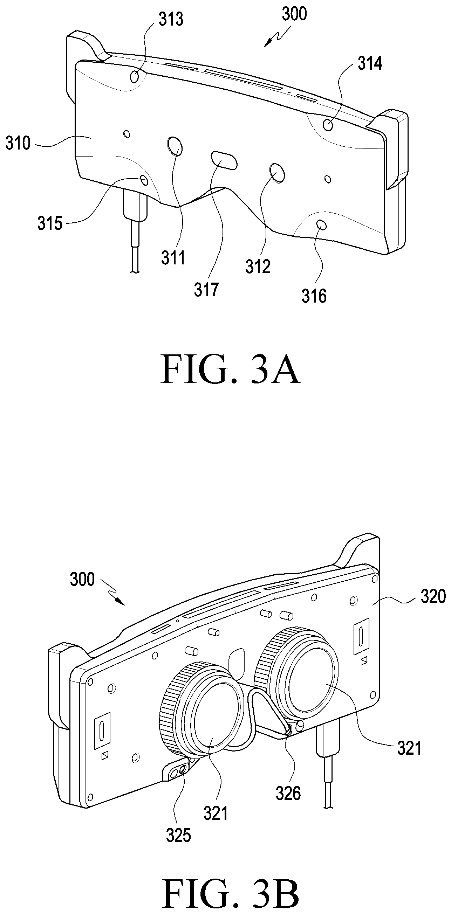

FIGS. 3A and 3B are diagrams illustrating the front and rear surfaces of a wearable electronic device 300 according to an embodiment.

Referring to FIGS. 3A and 3B, in an embodiment, camera modules 311, 312, 313, 314, 315, and 316 and/or a depth sensor 317 may be disposed on a first surface 310 of a housing to obtain information related to a surrounding environment of the wearable electronic device 300.

In an embodiment, the camera modules 311 and 312 may obtain an image related to the surrounding environment of the wearable electronic device 300.

In an embodiment, the camera modules 313, 314, 315, and 316 may obtain an image, while the wearable electronic device 300 is worn by the user. The camera modules 313, 314, 315, and 316 may be used for hand detection and tracking, and user gesture (e.g., hand movement) recognition. The camera modules 313, 314, 315, and 316 may be used for 3DoF or 6DoF head tracking, location (space or environment) recognition, and/or movement recognition. In an embodiment, the camera modules 311 and 312 may also be used for hand detection and tracking, and user gesture recognition.

In an embodiment, the depth sensor 317 may be configured to transmit a signal and receive a signal reflected from an object, and used for the purpose of identifying a distance to an object, such as time of flight (TOF). Alternatively or additionally to the depth sensor 217, the camera modules 313, 314, 315, and 316 may identify a distance to an object.

According to an embodiment, face recognition camera modules 325 and 326 and/or a display 321 (and/or a lens) may be disposed on a second surface 320 of the housing.

In an embodiment, the face recognition camera modules 325 and 326 adjacent to the display 321 may be used for the purpose of recognizing the user's face or may recognize and/or track both eyes of the user.

In an embodiment, the display 321 (and/or the lens) may be disposed on the second surface 320 of the wearable electronic device 300. In an embodiment, the wearable electronic device 300 may not include the camera modules 315 and 316 among a plurality of camera modules 313, 314, 315, and 316. Although not shown in FIGS. 3A and 3B, the wearable electronic device 300 may further include at least one of the components illustrated in FIG. 2.

As described above, according to an embodiment, the wearable electronic device 300 may have a form factor for being worn on the user's head. The wearable electronic device 300 may further include a strap and/or wearing member to be secured on a body part of the user. The wearable electronic device 300 may provide a user experience based on augmented reality, virtual reality, and/or mixed reality, while worn on the user's head.

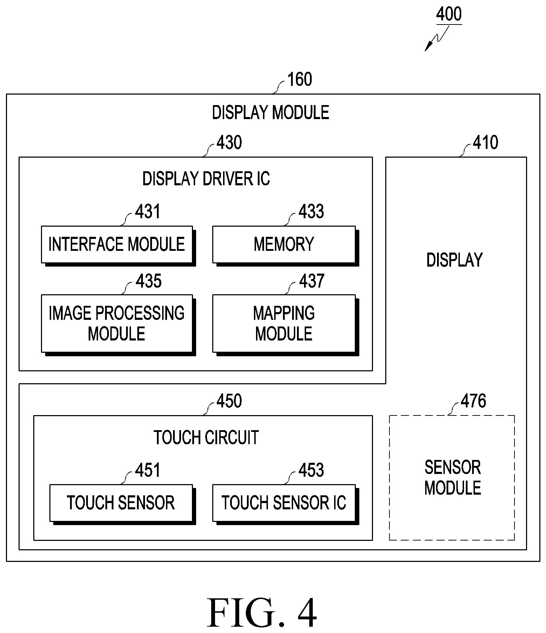

FIG. 4 is a block diagram 400 illustrating the display module 160 according to an embodiment of the disclosure.

Referring to FIG. 4, the display module 160 may include a display 410 and a display driver IC (DDI) 430 for controlling the display. The DDI 430 may include an interface module 431, memory 433 (e.g., buffer memory), an image processing module 435, or a mapping module 437. The DDI 430 may receive image information including, for example, screen input data or an image control signal corresponding to a command for controlling the screen input data, from another component of the electronic device 101 through the interface module 431. For example, according to an embodiment, the image information may be received from the processor 120 (e.g., the main processor 121 (e.g., an AP) or the auxiliary processor 123 (e.g., a graphic processing unit) that operates independently of the function of the main processor 121)). The DDI 430 may communicate with a touch circuit 450 or the sensor module 176 through the interface module 431. In addition, the DDI 430 may store at least a portion of the received image information in the memory 433, for example, in units of frames. The image processing module 435 may perform preprocessing or postprocessing (e.g., resolution, brightness, or size adjustment) on at least a portion of the screen input data based on at least the characteristics of the screen input data or the characteristics of the display 410, for example. The mapping module 437 may generate a voltage value or current value corresponding to the screen input data that has been preprocessed or postprocessed through the image processing module 135. According to an embodiment, the generation of the voltage value or current value may be performed based at least in part on the properties (e.g., arrangement (RGB stripe or pentile structure) of the pixels, or the size of each of sub-pixels) of pixels of the display 410. At least some of the pixels of the display 410 may be driven based at least in part on the voltage value or current value, so that visual information (e.g., text, an image, or an icon) corresponding to the screen input data may be displayed through the display 410.

According to an embodiment, the display module 160 may further include the touch circuit 450. The touch circuit 450 may include a touch sensor 451 and a touch sensor IC 453 for controlling the same. The touch sensor IC 453 may control the touch sensor 451 to detect, for example, a touch input or hovering input at a specific position of the display 410. For example, the touch sensor IC 453 may detect the touch input or hovering input by measuring a change in a signal (e.g., voltage, light intensity, resistance, or charge) at the specific position of the display 410. The touch sensor IC 453 may provide information (e.g., position, area, pressure, or time) about the detected touch input or hovering input to the processor 120. According to an embodiment, at least a portion (e.g., the touch sensor IC 453) of the touch circuit 450 may be included as a portion of the DDI 430 or the display 410, or as a portion of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176, or a control circuit for the at least one sensor. In this case, the at least one sensor or the control circuit for it may be embedded in a portion (e.g., the display 410 or the DDI 430) of the display module 160 or a portion of the touch circuit 450. For example, when the sensor module 176 embedded in the display module 160 includes a biometric sensor (e.g., a fingerprint sensor), the biometric sensor may obtain biometric information (e.g., a fingerprint image) associated with a touch input through a partial area of the display 410. In another example, when the sensor module 176 embedded in the display module 160 includes a pressure sensor, the pressure sensor may obtain pressure information associated with a touch input through a partial area or the entire area of the display 410. According to an embodiment, the touch sensor 451 or the sensor module 176 may be disposed between pixels of a pixel layer of the display 410, or above or below the pixel layer. According to an embodiment, the sensor module 176 may also be disposed in the display 410 (e.g., a mechanism/structure supporting the display 410).

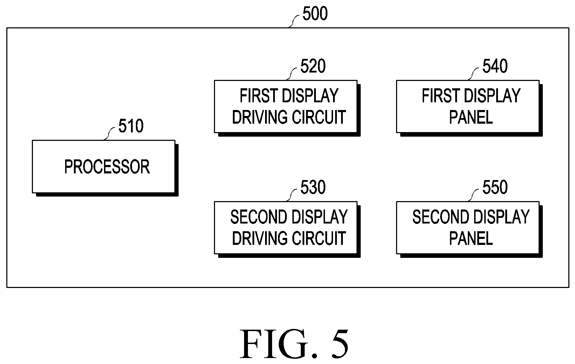

FIG. 5 is a block diagram illustrating a head mounted device 500 according to an embodiment of the disclosure.

Referring to FIG. 5, the head mounted device 500, (e.g., the electronic device 101 of FIG. 1, the wearable electronic device 200 of FIG. 2, or the wearable electronic device 300 of FIG. 3A) according to an embodiment may include a processor 510, a first display driving circuit 520, (e.g., the DDI 430 of FIG. 4), a second display driving circuit 530, (e.g., the DDI 430 of FIG. 4), a first display panel 540, (e.g., the display 321 of FIG. 3B or the display 410 of FIG. 4), and/or a second display panel 550 (e.g., the display 321 of FIG. 3B or the display 410 of FIG. 4).

In an embodiment, the head mounted device 500 may be a binocular stereo vision type that individually drives the first display panel 540 and the second display panel 550.

In an embodiment, the processor 510 may include a graphics processing unit that generates image data. Screen input data may define a screen output to the first display panel 540 and/or the second display panel 550. In an embodiment, the graphics processing unit included in the processor 510 may provide the screen input data to an AP included in the processor 510.

In an embodiment, the processor 510 may transmit screen input data for setting a data voltage to the first display driving circuit 520 and/or the second display driving circuit 530. In an embodiment, two processors 510 may be configured to transmit the screen input data to the first display driving circuit 520 and the second display driving circuit 530, respectively, or a single processor 510 may be configured to transmit the screen input data to each of the first display driving circuit 520 and the second display driving circuit 530.

In an embodiment, the processor 510 may transmit the screen input data to the first display driving circuit 520 and the second display driving circuit 530 with the same horizontal synchronization signal Hsync, the same vertical synchronization signal Vsync, and/or the same data reception timing (e.g., a vertical back porch VBP, a vertical front porch VFP, a horizontal back porch HBP, or a horizontal front porch HFP).

In an embodiment, the processor 510 may transmit commands related to data display timings (e.g., vertical back porchs VBP, vertical front porchs VFP, horizontal back porchs HBP, or horizontal front porchs HFP) of the first display driving circuit 520 and the second display driving circuit 530 to the first display driving circuit 520 and the second display driving circuit 530, respectively.

In an embodiment, the first display driving circuit 520 and the second display driving circuit 530 may output images to the first display panel 540 and the second display panel 550 based on the commands related to the data display timings received from the processor. In an embodiment, when data reception timings are different from the data display timings, the first display driving circuit 520 and the second display driving circuit 530 may store the screen input data in an internal buffer (e.g., the memory 433 of FIG. 4), and output images to the first display panel 540 and the second display panel 550 based on the data display timings.

In an embodiment, the processor 510 may provide screen input data in each frame to the first display driving circuit 520 and/or the second display driving circuit 530 through an interface. The length of one frame may be determined according to a driving frequency of the first display driving circuit 520 and/or the second display driving circuit 530. The driving frequency may be a scan rate of the first display driving circuit 520 and/or the second display driving circuit 530. The driving frequency and the length of one frame may be inversely proportional. For example, when the first display driving circuit 520 and/or the second display driving circuit 530 operates at a driving frequency of about 60Hz, the length of one frame may be about 16.67ms. In another example, when the first display driving circuit 520 and/or the second display driving circuit 530 operates at a driving frequency of about 120Hz, the length of one frame may be about 8.33ms.

In an embodiment, the first display driving circuit 520 and the second display driving circuit 530 may drive the first display panel 540 and the second display panel 550, respectively, and may be implemented as a DDI or a timing controller (TCON). In an embodiment, the first display driving circuit 520 and the second display driving circuit 530 control the overall operation of the first display panel 540 or the second display panel 550, and control input/output of data packets having display data (e.g., data displayed through the display) according to a clock CLK. The data packets may include display data, a horizontal synchronization signal Hsync, a vertical synchronization signal Vsync, and/or a data enable signal DE. For example, the horizontal synchronization signal Hsync is a signal indicating a time taken to display one horizontal line of a screen, and the vertical synchronization signal Vsync is a signal indicating a time taken to display one frame of the screen. In addition, the data enable signal is a signal indicating a period during which a voltage (data voltage) is supplied to pixels defined on the first display panel 540 or the second display panel 550.

In an embodiment, the first display driving circuit 520 and the second display driving circuit 530 may set data voltages to be scanned on the first display panel 540 and the second display panel 550, respectively, based on the screen input data. In an embodiment, the first display panel 540 and/or the second display panel 550 may display a screen according to the scanned data voltage.

In an embodiment, the processor 510 may modify at least a portion of the screen input data input to the first display driving circuit 520 and the second display driving circuit 530, and change a driving timing of at least one of the first display driving circuit 520 or the second display driving circuit 530 based on the modification of the screen input data. In an embodiment, the processor 510 may change the driving timing based on an effective display area of the first display panel 540 and/or the second display panel 550, which is changed based on the modification of the screen input data.

In an embodiment, the processor 510 may change a light emitting timing of at least one of the first display panel 540 or the second display panel 550, based on the modification of the screen input data input to the first display driving circuit 520 and the second display driving circuit 530. In an embodiment, when an OLED or OLEDoS is applied to the first display panel 540 or the second display panel 550, the processor 510 may change a light emitting timing included in a light emission signal (e.g., an EM signal) based on the effective display area of the first display panel 540 and/or the second display panel 550, which is changed based on the modification of the screen input data.

In an embodiment, the first display panel 540 and the second display panel 550 may have fixed positions on one side and the other side of the head mounted device 500, respectively. In an embodiment, the first display panel 540 may be located to correspond to the left eye of the user wearing the head mounted device 500, and the second display panel 550 may be located to correspond to the right eye of the user wearing the head mounted device 500.

The head mounted device 500 according to an embodiment may obtain a positional deviation, size deviation, and/or rotational deviation between a screen displayed through the first display panel 540 and a screen displayed through the second display panel 550.

In an embodiment, the head mounted device 500 may receive the deviation between the screen displayed through the first display panel 540 and the screen displayed through the second display panel 550 from an external device (e.g., a detection device), while displaying the screens on the first display panel 540 and the second display panel 550.

In an embodiment, the head mounted device 500 may capture images of the screen displayed through the first display panel 540 and the screen displayed through the second display panel 550, or images reflected from the respective screens through a camera (e.g., the first camera module 251 of FIG. 2), and identify the deviation between the screen displayed through the first display panel 540 and the screen displayed through the second display panel 550 from the captured images. In an embodiment, the head mounted device 500 may store the identified deviation between the screen displayed through the first display panel 540 and the screen displayed through the second display panel 550 in memory (e.g., memory (not shown) connected to the processor 510 or memory (not shown) connected to the first display driving circuit 520 or the second display driving circuit 530), for use.

In an embodiment, the head mounted device 500 may adjust (e.g., move, enlarge/reduce, or rotate) the screen displayed through the first display panel 540 and/or the screen displayed through the second display panel 550, based on a user input. In an embodiment, the head mounted device 500 may obtain the deviation between the screen displayed through the first display panel 540 and the screen displayed through the second display panel 550, based on a user input for adjusting the screen displayed through the first display panel 540 and/or the screen displayed through the second display panel 550.

In an embodiment, the head mounted device 500 may obtain the screen displayed through the first display panel 540 and the screen displayed through the second display panel 550, or images reflected from the screens, through a separate sensor (not shown), and obtain the deviation in real time based on the obtained screens or images.

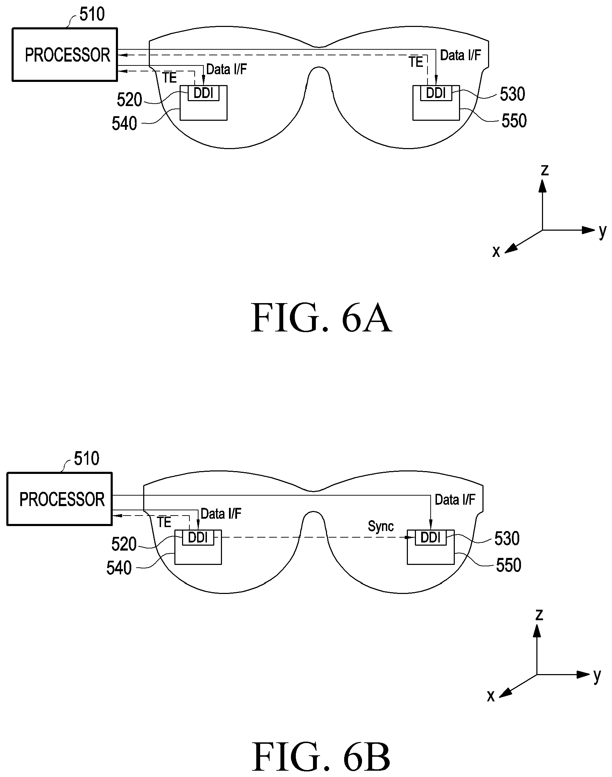

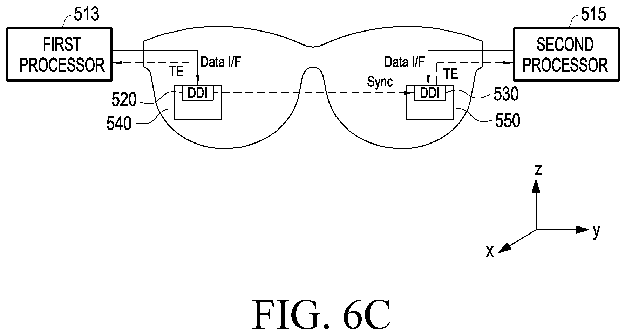

FIGS. 6A, 6B, and 6C are detailed block diagrams illustrating the head mounted device 500 according to a first embodiment.

Referring to FIGS. 6A, 6B, and 6C, the first display driving circuit 520 and/or the second display driving circuit 530 according to an embodiment may operate in a first mode (e.g., command mode) in which it receives screen input data Data I/F and a command from the outside and drives the first display panel 540 and/or the second display panel 550.

In an embodiment, the first display driving circuit 520 and/or the second display driving circuit 530 may include a frame buffer (not shown). The frame buffer (not shown) may store the screen input data Data I/F during one frame. The first display driving circuit 520 and/or the second display driving circuit 530 according to an embodiment may store the screen input data Data I/F transmitted by the processor 510 in the frame buffer (not shown). The first display driving circuit 520 and/or the second display driving circuit 530 according to an embodiment may output a screen to the first display panel 540 and/or the second display panel 550 by scanning the screen input data Data I/F stored in the frame buffer (not shown) during one frame.

In an embodiment, the first display driving circuit 520 and/or the second display driving circuit 530 may generate a tearing effect (TE) signal that reduces a TE. In an embodiment, the TE signal may be a signal that controls the timing of supplying a data voltage to the first display panel 540 and/or the second display panel 550. For example, the TE may be a phenomenon in which an image of a current frame is scanned while an image of a previous frame remains.

In an embodiment, the first display driving circuit 520 and/or the second display driving circuit 530 may transmit the generated TE signal to the processor 510, and the processor 510 may set a timing of the screen input data Data I/F based on the received TE signal and transmit the screen input data Data I/F to the first display driving circuit 520 and/or the second display driving circuit 530 based on the set timing, thereby reducing the TE.

In an embodiment, the processor 510 and the first display driving circuit 520 and/or the second display driving circuit 530 may be connected through an interface. For example, the processor 510 and the first display driving circuit 520 and/or the second display driving circuit 530 may be connected through a designated interface (e.g., mobile industry processor interface (MIPI)). The interface may transmit a command. The processor 510 may transmit the screen input data Data I/F to the first display driving circuit 520 and/or the second display driving circuit 530 through the interface. The interface is not limited to the above example, and various interfaces may be formed, such as a mobile display digital interface (MDDI), a serial peripheral interface (SPI), an inter-integrated circuit (I2C), an improved inter-integrated circuit (I3C), or a compact display port (CDP).

In an embodiment, as illustrated in FIG. 6A, a single processor 510 may be configured and receive TE signals from the first display driving circuit 520 and the second display driving circuit 530, respectively. The processor 510 may set timings of screen input data Data I/F based on the TE signals received from the first display driving circuit 520 and the second display driving circuit 530, respectively, and transmit the screen input data Data I/F to the first display driving circuit 520 and the second display driving circuit 530, respectively, based on the set timings. In an embodiment, when driving timings of the first display driving circuit 520 and the second display driving circuit 530 are changed, the first display driving circuit 520 and the second display driving circuit 530 may separate the timings of their generated TE signals, and the processor 510 may separate timings of the screen input data Data I/F input to the first display driving circuit 520 and the second display driving circuit 530 based on the TE signals generated by the first display driving circuit 520 and the second display driving circuit 530, respectively.

In an embodiment, as illustrated in FIG. 6B, a single processor 510 may be configured and receive a TE signal from either the first display driving circuit 520 or the second display driving circuit 530. The processor 510 may set timings of screen input data Data I/F based on the received TE signal, and transmit the screen input data Data I/F to the first display driving circuit 520 and the second display driving circuit 530, respectively, based on the set timings. In an embodiment, the first display driving circuit 520 and the second display driving circuit 530 may synchronize the driving timings of the first display driving circuit 520 and the second display driving circuit 530 based on a synchronization signal sync. In an embodiment, when the driving timings of the first display driving circuit 520 and the second display driving circuit 530 are changed, the timing of a display period may be changed using the internal frame buffer of the first display driving circuit 520 and/or the second display driving circuit 530.

In an embodiment, as illustrated in FIG. 6C, the processor 510 may be divided into a first processor 513 and a second processor 515, the first processor 513 may receive a TE signal from the first display driving circuit 520, and the second processor 515 may receive a TE signal from the second display driving circuit 530. In an embodiment, the first processor 513 and the second processor 515 may set timings of screen input data Data I/F based on the received TE signals, and transmit the screen input data Data I/F to the first display driving circuit 520 and the second display driving circuit 530, respectively, based on the set timings. In an embodiment, the first display driving circuit 520 and the second display driving circuit 530 may synchronize the driving timings of the first display driving circuit 520 and the second display driving circuit 530 based on a synchronization signal sync. In an embodiment, when the driving timings of the first display driving circuit 520 and the second display driving circuit 530 are changed, the first display driving circuit 520 and the second display driving circuit 530 may separate the timings of their generated TE signals, and the processor 510 may separate the timings of the screen input data Data I/F input to the first display driving circuit 520 and the second display driving circuit 530, based on the TE signals generated by the first display driving circuit 520 and the second display driving circuit 530, respectively. In an embodiment, the first display driving circuit 520 and/or the second display driving circuit 530 may change the timing of a display period by using the internal frame buffer.

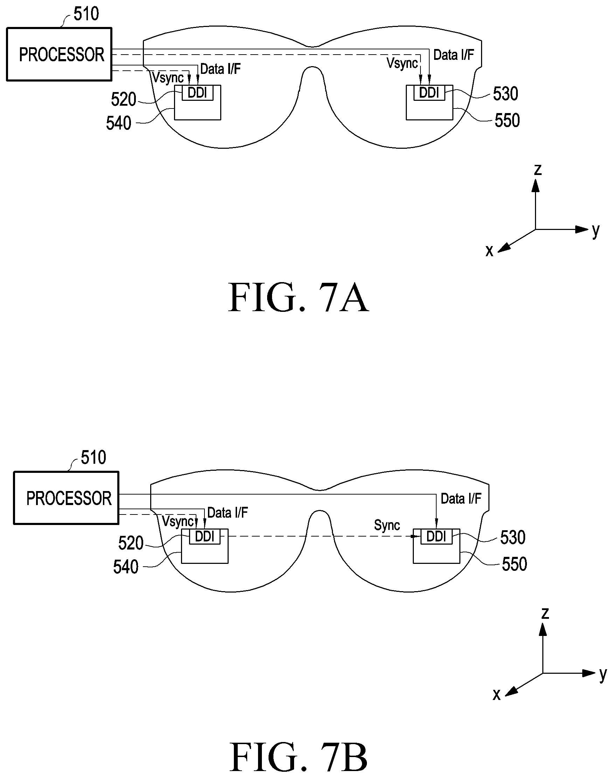

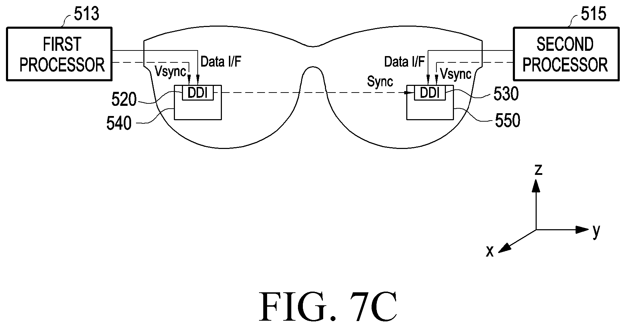

FIGS. 7A, 7B, and 7C are detailed block diagrams illustrating the head mounted device 500 according to the second embodiment.

Referring to FIGS. 7A, 7B, and 7C, the first display driving circuit 520 and/or the second display driving circuit 530 according to an embodiment may not be provided with the frame buffer, and operate in a second mode (e.g., video mode) in which it drives the first display panel 540 and/or the second display panel 550 based on an operation timing set by the processor 510.

In an embodiment, the processor 510 may transmit screen input data Data I/F and a vertical synchronization signal Vsync to the first display driving circuit 520 and/or the second display driving circuit 530 through the interface. The first display driving circuit 520 and the second display driving circuit 530 may output horizontal synchronization signals, vertical synchronization signals, data enable signals, display data, and/or clocks CLK to the first display panel 540 and the second display panel 550, respectively.

In an embodiment, when changing the driving timings of the first display driving circuit 520 and the second display driving circuit 530, the processor 510 may change the timings of the vertical synchronization signal Vsync transmitted to the first display driving circuit 520 and the second display driving circuit 530.

In an embodiment, as illustrated in FIG. 7A, a single processor 510 may be configured and transmit screen input data Data I/F and a vertical synchronization signal Vsync to the first display driving circuit 520 and the second display driving circuit 530, respectively. The first display driving circuit 520 and the second display driving circuit 530 may operate to display display data included in the screen input data Data I/F on the first display panel 540 and the second display panel 550, respectively, based on the vertical synchronization signal Vsync.

In an embodiment, as illustrated in FIG. 7B, a single processor 510 may be configured, transmit screen input data Data I/F to the first display driving circuit 520 and the second display driving circuit 530, and transmit a vertical synchronization signal Vsync to either the first display driving circuit 520 or the second display driving circuit 530. In an embodiment, the first display driving circuit 520 and the second display driving circuit 530 may synchronize their driving timings based on a synchronization signal sync.

In an embodiment, as illustrated in FIG. 7C, the processor 510 may be divided into the first processor 513 and the second processor 515. The first processor 513 may transmit screen input data Data I/F and a vertical synchronization signal to the first display driving circuit 520. The second processor 515 may transmit screen input data Data I/F and a vertical synchronization signal to the second display driving circuit 530. In an embodiment, the first display driving circuit 520 and the second display driving circuit 530 may synchronize their driving timings based on a synchronization signal sync.

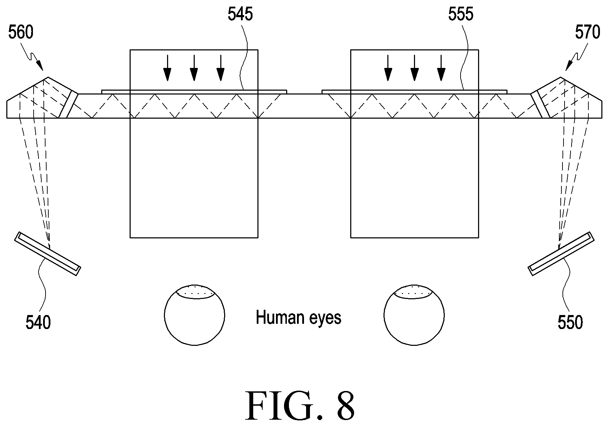

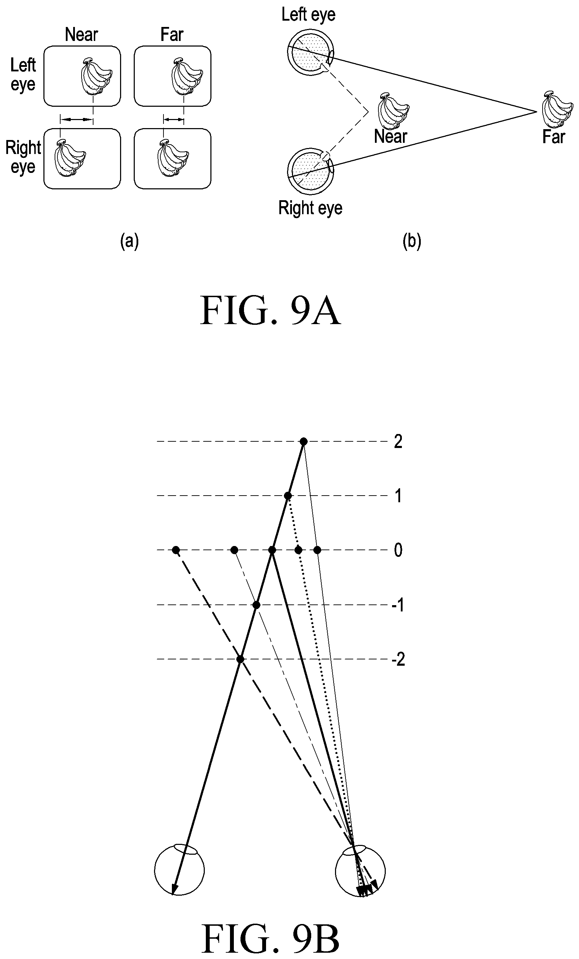

FIG. 8 is a schematic diagram illustrating the head mounted device 500 that displays a screen according to an embodiment of the disclosure. FIG. 9A illustrates binocular disparities between the left and right eyes according to depths according to an embodiment of the disclosure. FIG. 9B is a schematic diagram illustrating depth perception based on image acquisition of the left and right eyes according to an embodiment of the disclosure.

Referring to FIG. 8, the head mounted device 500 may include the first display panel 540 that displays a screen so that an image may be input to the user's left eye, and the second display panel 550 that displays a screen so that an image may be input to the user's right eye. In an embodiment, the first display panel 540 may display a screen to the user's left eye through a first optical system 560. In an embodiment, the second display panel 550 may display a screen to the user's right eye through a second optical system 570. In an embodiment, the first display panel 540 and the second display panel 550 may display screens on a first display member 545 and a second display member 555 (e.g., the display member 201 of FIG. 2) located in front of the user's left and right eyes, respectively.

In an embodiment, the first optical system 560 and the second optical system 570 may transmit the screens displayed on the first display panel 540 and the second display panel 550 to the user's left and right eyes by reflection through a mirror or refraction through a lens. In an embodiment, the first optical system 560 and the second optical system 570 may enlarge the screens displayed on the first display panel 540 and the second display panel 550 and transmit them to the user's left and right eyes.

For example, when the first display panel 540 and the second display panel 550 are implemented with 6000 pixels per inch (ppi) and 20 pixels per degree (ppd) for the left and right eyes of the user, an image may be magnified 60 to 100 times depending on a viewing distance (or a distance at which the image is formed). Referring to the following table, the PPI of an image formed on the user's eyes may be identified depending on a viewing distance and ppd.

**[Table 1]**

| Viewing distance [cm] | 30 | 40 | 50 |
|---|---|---|---|
| PPD | | | |
| 20 | 97 | 73 | 58 |
| 30 | 146 | 109 | 87 |
| 40 | 194 | 146 | 116 |

For example, screens displayed at 6000 ppi on the first display panel 540 and the second display panel 550 may be magnified to 58 to 97 ppi and input to the user's eyes depending on the viewing distance. Accordingly, a mechanical deviation or assembly deviation of the first display panel 540 and the second display panel 550 fixed to the head mounted device 500 may be magnified 60 to 100 times on a screen input to the user as perceived by the user. Referring to FIGS. 9A and 9B, the user may recognize the depth of an object based on the positions of the object input to the left and right eyes. For example, the user may recognize the depth (disparity distance) of an object based on the difference between an image of the object input to the left eye and an image of the object input to the right eye. For example, when the difference between the positions of the object input to the left and right eyes is relatively small (e.g., Far in (a) and (b) of FIG. 9A), the user may recognize the object as relatively far away, and when the difference between the positions of the object is relatively large (e.g., Near in (a) and (b) of FIG. 9A), the user may recognize the object as relatively close.

In an embodiment, when there is a deviation between the positions of an object input to the left and right eyes of the user, a sense of depth different from that intended by the head mounted device 500 may be perceived. In an embodiment, as illustrated in FIG. 9B, when there is a deviation between the positions of an object input to the left and right eyes, a sense of depth different from that intended for the object may be perceived. For example, when the deviation between the positions of the object input to the left or right eye occurs in a direction in which they are close to each other (-2 or -1), the object may be perceived as having a relatively small depth. On the contrary, when the deviation between the positions of the object input to the left or right eye occurs in a direction in which they are away from each other (1 or 2), the object may be perceived as having a relatively large depth.

Further, this may cause fatigue and operational errors due to a continued error between a displayed image of the head mounted device 500 and an image recognized by the user.

Therefore, when a mechanical deviation occurs in the head mounted device 500 in which the first display panel 540 and the second display panel 550 are completely assembled, a deviation in an image recognized by the user may be resolved by changing a screen displayed on the first display panel 540 and/or the second display panel 550 without reassembly. Further, service cost may be reduced by compensating for a deviation caused by mechanical deformation that occurs during use of the head mounted device 500.

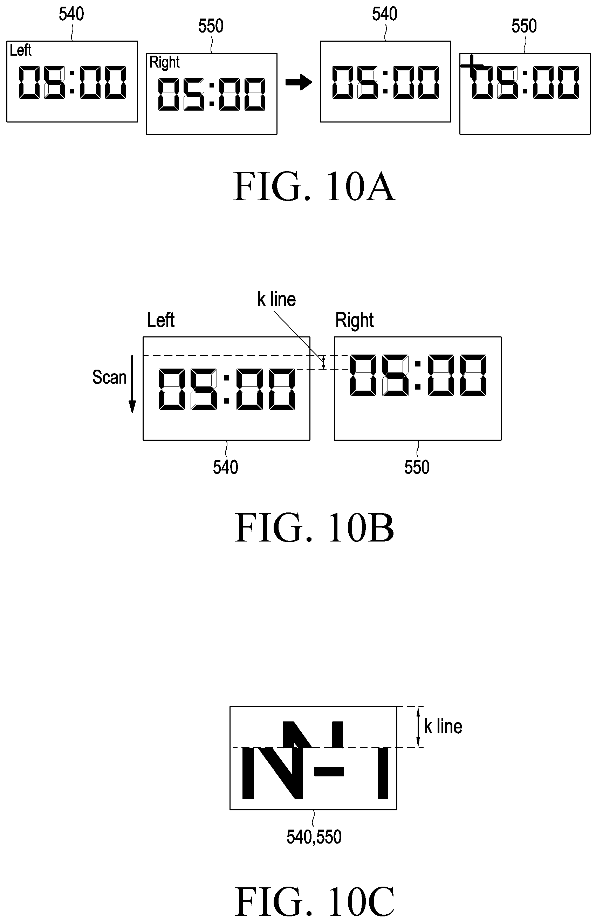

FIG. 10A illustrates a positional deviation on a plane between a screen displayed on the first display panel 540 and a screen displayed on the second display panel 550 according to an embodiment of the disclosure. FIG. 10B illustrates a screen displayed on the second display panel 550, which is moved in parallel on a plane according to an embodiment of the disclosure. FIG. 10C illustrates a tearing screen based on parallel movement of a screen displayed on the second display panel 550 according to an embodiment of the disclosure.

Referring to FIGS. 10A and 10B, the head mounted device 500 according to an embodiment may obtain a positional deviation on a plane between a screen displayed through the first display panel 540 and a screen displayed through the second display panel 550. In an embodiment, the head mounted device 500 may obtain a positional deviation along the Y axis (e.g., the Y axis of FIG. 6A) or the Z axis (e.g., the Z axis of FIG. 6A) between the screen displayed through the first display panel 540 and the screen displayed through the second display panel 550.

In an embodiment, the head mounted device 500 may modify at least a portion of screen input data input to at least one of the first display driving circuit 520 or the second display driving circuit 530. In an embodiment, the head mounted device 500 may modify the screen input data input to the at least one of the first display driving circuit 520 or the second display driving circuit 530 to move the screen displayed through the first display panel 540 or the screen displayed through the second display panel 550 in parallel, as illustrated in FIG. 10B. Accordingly, images of an object displayed on the user's eyes may be displayed at the same position. For example, the head mounted device 500 may modify the screen input data to move a screen displayed through the second display panel 550 located relatively downward (in the Z-axis direction (e.g., the Z-axis direction of FIG. 6A)) in parallel upward (in the Z-axis direction (e.g., the Z-axis direction of FIG. 6A)) by k lines.

In an embodiment, the head mounted device 500 may change the driving timing of at least one of the first display driving circuit 520 or the second display driving circuit 530 based on the modification of the at least portion of the screen input data.

In an embodiment, the first display driving circuit 520 and the second display driving circuit 530 may scan screens on the first display panel 540 and the second display panel 550 in a specified scanning direction. For example, the specified scanning direction on the first display panel 540 and the second display panel 550 may be from the top to the bottom along the Z axis (e.g., the Z axis of FIG. 6A), and the first display panel 540 and the second display panel 550 may gradually display (scan) a plurality of scan lines extending in the Y-axis direction (e.g., the Y-axis direction of FIG. 6A) in the scanning direction.

For example, since parallel movement of the first display panel 540 or the second display panel 550 in a direction (e.g., the Y-axis direction (e.g., the Y-axis direction of FIG. 6A)) perpendicular to the scanning direction is movement in the same scan line, there is almost no time difference caused by the scanning operation on the first display panel 540 or the second display panel 550. However, since k-line parallel movement of the first display panel 540 or the second display panel 550 in a direction (e.g., the Z-axis direction (e.g., the Z-axis direction of FIG. 6A) parallel to the scanning direction results in movement of scan lines as illustrated in FIG. 10B, images of an object may be scanned at different scanning time points to be displayed through the first display panel 540 and the second display panel 550. In an embodiment, as illustrated in FIG. 10C, instantaneously different screens may be displayed through the first display panel 540 and the screen displayed through the second display panel 550, thereby causing a tearing phenomenon in which an image is torn in a k^{th} line.

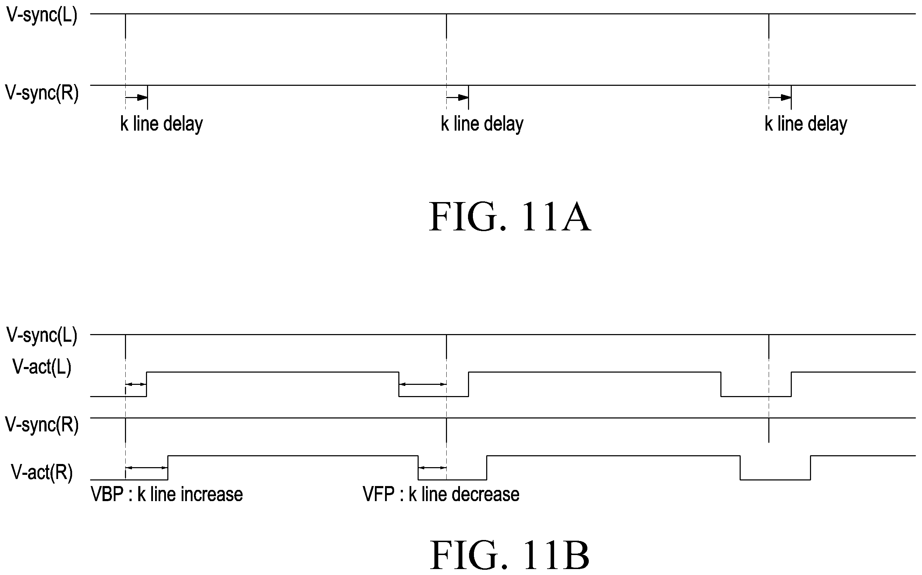

FIG. 11A illustrates a timing of a vertical synchronization signal V-sync(L) or Vsync(R) or screen input data of at least one of the first display driving circuit 520 or the second display driving circuit 530, based on parallel movement of a screen according to an embodiment of the disclosure. FIG. 11B illustrates a timing of a display period V-act(L) or V-act(R) of at least one of the first display driving circuit 520 or the second display driving circuit 530, based on parallel movement of a screen according to an embodiment of the disclosure.

Referring to FIGS. 11A and 11B, the head mounted device 500 according to an embodiment may change the driving timing of at least one of the first display driving circuit 520 or the second display driving circuit 530, based on parallel movement of the first display panel 540 or the second display panel 550 in the scanning direction.

In an embodiment, the head mounted device 500 may change the timing of the vertical synchronization signal V-sync(L) or V-sync(R) or screen input data transmitted to at least one of the first display driving circuit 520 or the second display driving circuit 530, as illustrated in FIG. 11A. In an embodiment, since the screen input data is output based on a TE signal received from the first display driving circuit 520 or the second display driving circuit 530, the timing of the screen input data may be changed by changing the timing of the TE signal.

In an embodiment, the head mounted device 500 may change the timing of the vertical synchronization signal V-sync(L) or V-sync(R) or the timing of the screen input data, based on the number of scan lines moved in the scanning direction on the first display panel 540 or the second display panel 550. For example, when the screen displayed on the second display panel 550 is moved upward by k lines in the scanning direction, the timing of the vertical synchronization signal Vsync or the timing of the screen input data transmitted to the second display driving circuit 530 may be delayed by a scanning time of k lines.

In an embodiment, the head mounted device 500 may change the timing of the display period V-act(L) or V-act(R) of at least one of the first display driving circuit 520 or the second display driving circuit 530 driving the first display panel 540 or the second display panel 550, while maintaining the timing of the vertical synchronization signal V-sync(L) or V-sync(R) or the screen input data, as illustrated in FIG. 11B.

In an embodiment, the head mounted device 500 may modify a vertical back porch VBP, which is a period in which buffering occurs in the first display driving circuit 520 or the second display driving circuit 530, before the display periods V-act(L) and V-act(R) start within one frame. In an embodiment, the head mounted device 500 may modify a vertical front porch VFP, which is a period in which the processor 510 starts transmitting image data to the first display driving circuit 520 or the second display driving circuit 530 after the display periods V-act(L) and V-act(R) proceed within one frame. The display period V-act(L) or V-act(R) may be a period in which the first display driving circuit 520 or the second display driving circuit 530 scans a data voltage on the first display panel 540 or the second display panel 550 within one frame, and thus a period in which a screen is output.

In an embodiment, the head mounted device 500 may change the vertical front porch VFP or the vertical back porch VBP based on the number of scan lines moved in the scanning direction on the first display panel 540 or the second display panel 550. For example, when the screen displayed on the second display panel 550 is moved upward by k lines in the scanning direction, the second display driving circuit 530 may change the timing of the display period V-act(L) or V-act(R) of the second display driving circuit 530 so as to increase the vertical back porch VBP by k lines and decrease the vertical front porch VFP by k lines.

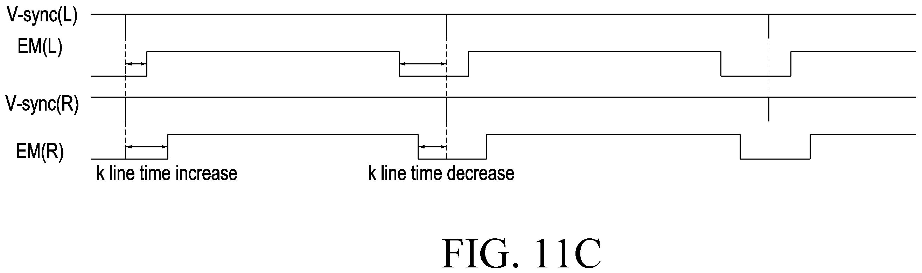

FIG. 11C illustrates an embodiment of changing light emitting timings of the first display panel 540 and the second display panel 550 based on parallel movement of a screen according to an embodiment of the disclosure.

Referring to FIG. 11C, the head mounted device 500 (e.g., the processor 510, the first display driving circuit 520, or the second display driving circuit 530 of FIG. 5) according to an embodiment may change the light emitting timings of the first display panel 540 and the second display panel 550, based on modification of at least a portion of screen input data. In an embodiment, the head mounted device 500 may change the light emitting timing of the first display panel 540 or the second display panel 550, while maintaining the timing of a vertical synchronization signal V-sync(L) or V-sync(R) or the screen input data. In an embodiment, the head mounted device 500 may control light emission of the first display panel 540 or the second display panel 550 based on light emission-related signals EM(L) and EM(R). In an embodiment, the head mounted device 500 may control the timings of the light emission-related signals (e.g., EM(L) and EM(R)).

In an embodiment, the head mounted device 500 may change the timings of the light emission-related signals EM(L) and EM(R) based on the number of scan lines moved in the scanning direction on the first display panel 540 or the second display panel 550. For example, when the screen displayed through the second display panel 550 is moved upward by k lines in the scanning direction, the light emitting timing of the second display driving circuit 530 may be changed such that the second display driving circuit 530 delays the timing of EM(R) by k lines (k line time increase) and advances the timing of EM(R) by k lines (k line time decrease).

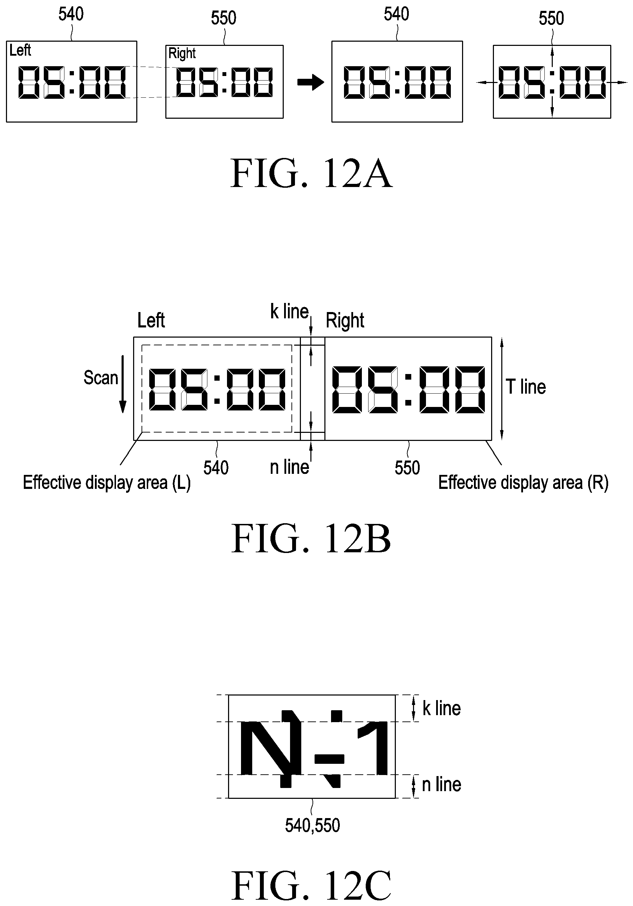

FIG. 12A illustrates a size deviation between a screen displayed on the first display panel 540 and a screen displayed on the second display panel 550 according to an embodiment of the disclosure. FIG. 12B illustrates an enlarged or reduced screen displayed on the second display panel 550 according to an embodiment of the disclosure. FIG. 12C illustrates a tearing screen caused by enlargement or reduction of a screen displayed on the second display panel 550 according to an embodiment of the disclosure.

Referring to FIGS. 12A and 12B, the head mounted device 500 according to an embodiment may obtain a size deviation based on a positional deviation in a depth direction between a screen displayed through the first display panel 540 and a screen displayed through the second display panel 550.

In an embodiment, when a depth difference occurs in the X-axis direction (e.g., the X-axis direction of FIG. 6A) between the screen displayed through the first display panel 540 and the screen displayed through the second display panel 550, the sizes of the screens may be different. Since the human eye is not capable of performing an image enlargement/reduction operation unlike a positional deviation in a plane direction, it may not correct the image size deviation. Therefore, when a size deviation occurs in an image, a problem may occur in which images input to the left and right eyes do not overlap.

In an embodiment, the head mounted device 500 may modify at least a portion of screen input data input to at least one of the first display driving circuit 520 or the second display driving circuit 530. In an embodiment, the head mounted device 500 may modify screen input data input to at least one of the first display driving circuit 520 or the second display driving circuit 530 so that a screen displayed through the first display panel 540 or the screen displayed through the second display panel 550 is enlarged or reduced, as illustrated in FIG. 12B. Accordingly, images of an object displayed on the user's eyes may be displayed in substantially the same size.

In an embodiment, when the sizes of the screen displayed through the first display panel 540 and the screen displayed through the second display panel 550 are different from each other, the head mounted device 500 may reduce a relatively large screen to correspond to a relatively small screen.

In an embodiment, when the sizes of the screen displayed through the first display panel 540 and the screen displayed through the second display panel 550 are different from each other, the head mounted device 500 may enlarge the relatively small screen to correspond to the relatively large screen. In an embodiment, when the screen displayed through the first display panel 540 or the second display panel 550 may not be enlarged any further due to the limit of a physical display range, the relatively large screen may be reduced to correspond to the relatively small screen.

For example, the head mounted device 500 may modify the screen input data to enlarge the screen displayed through the second display panel 550 by k lines upward (in the Z-axis direction (e.g., the Z-axis direction of FIG. 6A)) and by n lines downward (in the Z-axis direction (e.g., the Z-axis direction of FIG. 6A)).

In an embodiment, the head mounted device 500 may change the driving timing of at least one of the first display driving circuit 520 or the second display driving circuit 530 based on the modification of at least a portion of the screen input data.

For example, since enlargement or reduction of the first display panel 540 or the second display panel 550 in a direction (e.g., the Y-axis direction (e.g., the Y-axis direction of FIG. 6A)) perpendicular to the scanning direction is movement in the same scan line, there is almost no time difference caused by the scanning operation on the first display panel 540 or the second display panel 550. However, enlargement or reduction of the first display panel 540 or the second display panel 550 in a direction (e.g., the Z-axis direction (e.g., the Z-axis direction of FIG. 6A)) parallel to the scanning direction as illustrated in FIG. 12B may increase or decrease the number of scan lines, thereby resulting in different scanning time points for images of an object displayed through the first display panel 540 and the second display panel 550.

In an embodiment, for an image of the same object, a scanning time of T lines may be taken for the second display panel 550, while a scanning time of T-(k+n) lines may be taken for the first display panel 540. In an embodiment, as illustrated in FIG. 12C, as the screen displayed through the first display panel 540 and the screen displayed through the second display panel 550 may be instantaneously different due to the difference in scanning time, a tearing phenomenon may occur in which an image is torn in a k^{th} line and an n^{th} line.

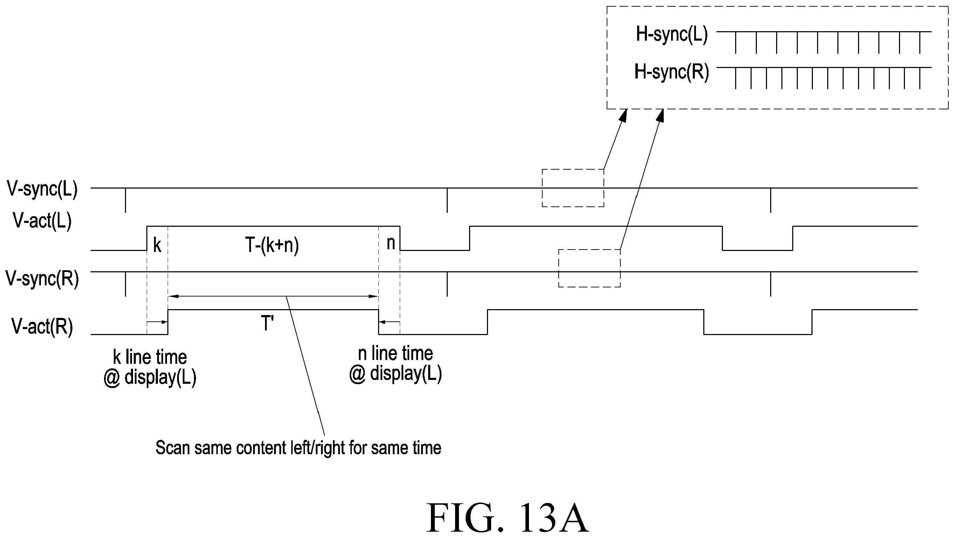

FIG. 13A illustrates a timing of a vertical synchronization signal V-sync(L) or Vsync(R) or screen input data of at least one of the first display driving circuit 520 or the second display driving circuit 530 based on enlargement or reduction of a screen according to an embodiment of the disclosure.

Referring to FIG. 13A, the head mounted device 500 according to an embodiment may change a driving period of at least one of the first display driving circuit 520 or the second display driving circuit 530 based on enlargement or reduction of the first display panel 540 or the second display panel 550 in the scanning direction.

In an embodiment, the head mounted device 500 may change the driving period of at least one of the first display driving circuit 520 or the second display driving circuit 530 so that a time T-(k+n) for scanning T-(k+n) scan lines in the first display panel 540 matches a time T' for scanning T scan lines in the second display panel 550. For example, the head mounted device 500 may reduce the driving period of the first display driving circuit 520 to (T-(k+n))/T times the driving period of the second display driving circuit 530. In an embodiment, the head mounted device 500 may increase the driving period of the second display driving circuit 530 to (T/(T-(k+n)) times the driving period of the first display driving circuit 520.

In an embodiment, the head mounted device 500 may change a scanning speed or clock speed of at least one of the first display driving circuit 520 or the second display driving circuit 530. For example, the head mounted device 500 may increase the scanning speed of the first display driving circuit 520 by reducing the period of the horizontal synchronization signal H-sync of the first display driving circuit 520, or may decrease the scanning speed of the second display driving circuit 530 by increasing the period of the horizontal synchronization signal H-sync of the second display driving circuit 530. The vertical synchronization signals V-sync(L) and V-sync(R) may be maintained constant. The head mounted device 500 may increase the clock speed of the first display driving circuit 520 or decrease the clock speed of the second display driving circuit 530.

In an embodiment, the head mounted device 500 may change the timing of the display period V-act(L) or V-act(R) of at least one of the first display driving circuit 520 or the second display driving circuit 530. In an embodiment, the head mounted device 500 may match scanning times for scanning images of an object and match the start and end times of the scanning times of the first display driving circuit 520 and the second display driving circuit 530 by changing the driving period of at least one of the first display driving circuit 520 or the second display driving circuit 530. In an embodiment, the head mounted device 500 may change the timing of the display period V-act(L) or V-act(R) in which an image is scanned on the first display panel 540 or the second display panel 550 by changing the vertical front porch VFP and/or vertical back porch VBF of the first display driving circuit 520 or the second display driving circuit 530.

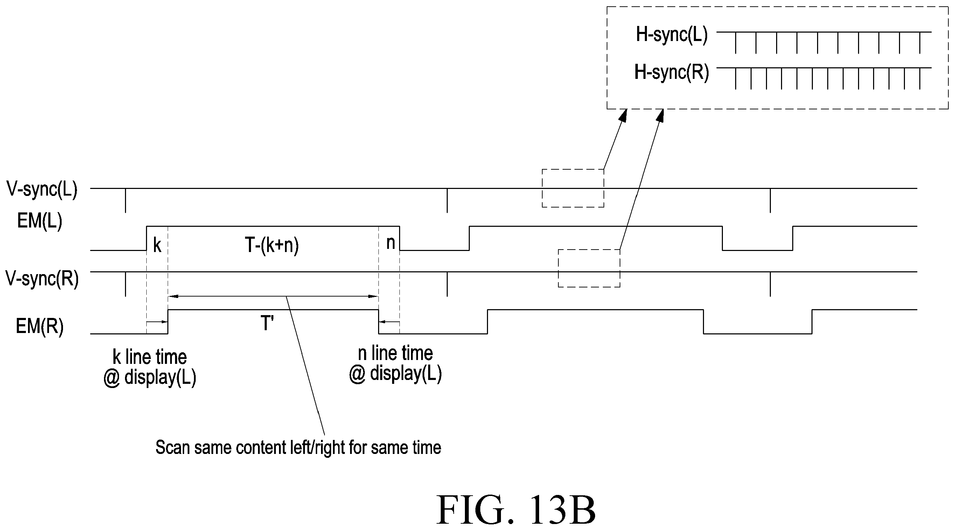

FIG. 13B illustrates an embodiment of changing the light emitting timing of the first display panel 540 or the second display panel 550 based on enlargement or reduction of a screen according to an embodiment of the disclosure.

Referring to FIG. 13B, the head mounted device 500 (e.g., the processor 510, the first display driving circuit 520, or the second display driving circuit 530 of FIG. 5) according to an embodiment may change the light emitting timings of the first display panel 540 and the second display panel 550, based on modification of at least a portion of screen input data. In an embodiment, the head mounted device 500 may change the light emitting timing of the first display panel 540 or the second display panel 550, while maintaining the timing of the vertical synchronization signal V-sync(L) or V-sync(R) or the screen input data. In an embodiment, the head mounted device 500 may control the light emission of the first display panel 540 or the second display panel 550 based on light emission-related signals.

In an embodiment, the head mounted device 500 may control the timings of the light emission-related signals (e.g., EM(L) and EM(R)). In an embodiment, the head mounted device 500 may control the light emission of the first display panel 540 or the second display panel 550 so that a light emitting timing at which the image of the object is displayed through the first display panel 540 coincides with a light emitting timing at which the image of the object is displayed through the second display panel 550.

In an embodiment, the head mounted device 500 may change a light emitting period of at least one of the first display driving circuit 520 or the second display driving circuit 530, so that the time T-(k+n) for scanning T-(k+n) scan lines on the first display panel 540 is equal to the time T' for scanning T scan lines on the second display panel 550.

For example, the head mounted device 500 may reduce the light emitting period of the first display driving circuit 520 to (T-(k+n))/T times the light emitting period of the second display driving circuit 530. In an embodiment, the head mounted device 500 may increase the light emitting period of the second display driving circuit 530 by (T/(T-(k+n)) times the light emitting period of the first display driving circuit 520.

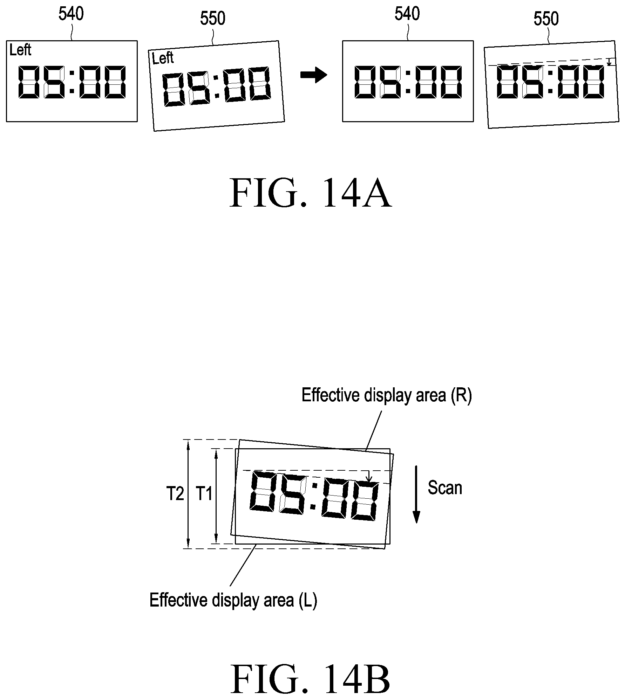

FIG. 14A illustrates a rotational deviation between a screen displayed on the first display panel 540 and a screen displayed on the second display panel 550 according to an embodiment of the disclosure. FIG. 14B illustrates rotation of a screen displayed on the second display panel 550 according to an embodiment of the disclosure.

Referring to FIGS. 14A and 14B, the head mounted device 500 according to an embodiment may obtain a rotational deviation in a roll direction with respect to the X axis (e.g., the X axis of FIG. 6A) between a screen displayed through the first display panel 540 and a screen displayed through the second display panel 550.

The head mounted device 500 according to an embodiment may modify at least a portion of screen input data input to at least one of the first display driving circuit 520 or the second display driving circuit 530, based on the rotational deviation between the screen displayed through the acquired first display panel 540 and the screen displayed through the second display panel 550. In an embodiment, the head mounted device 500 may modify the screen input data input to at least one of the first display driving circuit 520 or the second display driving circuit 530 so as to rotate the screen displayed through the first display panel 540 or the screen displayed through the second display panel 550, as illustrated in FIG. 14A.

In an embodiment, as illustrated in FIG. 14B, based on the rotation of the screen displayed through the first display panel 540 or the screen displayed through the second display panel 550, an effective display area of the first display panel 540 and an effective display area of the second display panel 550 may be different from each other.

In an embodiment, the head mounted device 500 may change the driving timing of at least one of the first display driving circuit 520 or the second display driving circuit 530 based on the effective display area L of the first display panel 540 and the effective display area R of the second display panel 550. In an embodiment, the head mounted device 500 may change the driving timing of at least one of the first display driving circuit 520 or the second display driving circuit 530 based on the heights of the effective display area L of the first display panel 540 and the effective display area R of the second display panel 550 in the scanning direction.

For example, as illustrated in FIG. 14B, as the screen displayed through the second display panel 550 is rotated, the height of the effective display area R of the second display panel 550 in the scanning direction may be changed, relative to the height of the effective display area L of the first display panel 540 in the scanning direction. In an embodiment, the head mounted device 500 may match a scanning time T2 and time point between the top and bottom of the effective display area R of the second display panel 550 in the scanning direction with the a scanning time T1 and time point of the effective display area L of the first display panel 540.

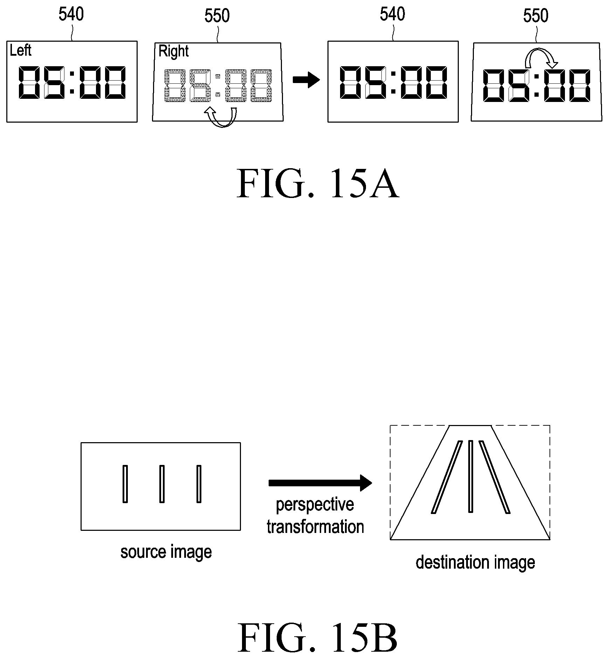

FIG. 15A illustrates a rotational deviation between a screen displayed on the first display panel 540 and a screen displayed on the second display panel 550 according to an embodiment of the disclosure. FIG. 15B illustrates an example of perspective transformation according to an embodiment of the disclosure.

Referring to FIGS. 15A and 15B, the head mounted device 500 according to an embodiment may obtain a rotational deviation between a screen displayed through the first display panel 540 and a screen displayed through the second display panel 550, in a pitch direction or a yaw direction with respect to the Y axis (e.g., the Y axis of FIG. 6A) or the Z axis (e.g., the Z axis of FIG. 6A).

The head mounted device 500 according to an embodiment may modify at least a portion of screen input data input to at least one of the first display driving circuit 520 or the second display driving circuit 530, based on the obtained rotational deviation between the screen displayed through the first display panel 540 and the screen displayed through the second display panel 550. In an embodiment, the head mounted device 500 may modify screen input data input to at least one of the first display driving circuit 520 or the second display driving circuit 530, so that the screen displayed through the first display panel 540 or the screen displayed through the second display panel 550 is perspective-transformed in an opposite direction of the rotational deviation, as illustrated in FIG. 15A.

In an embodiment, the head mounted device 500 may modify a source image into a destination image by applying perspective transformation to the source image, as illustrated in FIG. 15B. The head mounted device 500 may apply perspective transformation in the opposite direction of the rotational deviation based on a rule regarding how an image changes depending on an angle. For example, the perspective transformation may correct the rotational deviation by moving the coordinates of an image on the plane of the screen displayed through the first display panel 540 or the screen displayed through the second display panel 550, such as specifying a distance (perspective) from an observation point in a three-dimensional space.

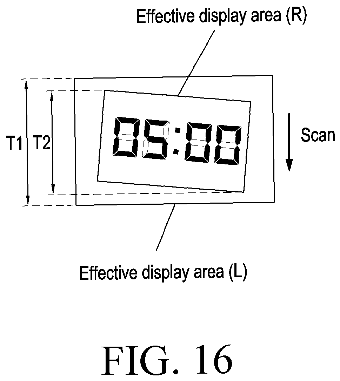

FIG. 16 illustrates a positional deviation, size deviation, and rotational deviation between a screen displayed on the first display panel 540 and a screen displayed on the second display panel 550 according to an embodiment of the disclosure.

Referring to FIG. 16, the head mounted device 500 may obtain a composite deviation in which at least two of a positional deviation, a size deviation, or a rotational deviation occur in combination between a screen displayed on the first display panel 540 and a screen displayed on the second display panel 550.

In an embodiment, when the head mounted device 500 obtains a composite deviation in which at least two of a positional deviation, a size deviation, or a rotational deviation are combined, the head mounted device 500 may modify at least a portion of screen input data input to at least one of the first display driving circuit 520 or the second display driving circuit 530, based on the composite deviation. For example, the head mounted device 500 may modify the screen input data input to at least one of the first display driving circuit 520 or the second display driving circuit 530, so that the screen displayed through the first display panel 540 or the second display panel 550 is moved in parallel, enlarged or reduced, and/or rotated.

In an embodiment, the head mounted device 500 may change the driving timing of at least one of the first display driving circuit 520 or the second display driving circuit 530, based on the modification of the at least portion of the screen input data. In an embodiment, the head mounted device 500 may identify an effective display area displayed through at least one of the first display panel 540 or the second display panel 550, based on the modification of the at least portion of the screen input data, and change a driving timing based on the identified effective display area.

In an embodiment, the head mounted device 500 may identify the scanning-direction height of the effective display area of the first display panel 540 or the second display panel 550, and change the driving timing of at least one of the first display driving circuit 520 or the second display driving circuit 530 based on the identified height.

For example, an effective display area R displayed through the second display panel 550 may have a height of T2 in the scanning direction, and an effective display area L displayed through the first display panel 540 may have a height of T1 in the scanning direction. The head mounted device 500 may change the driving period of the first display driving circuit 520 or the second display driving circuit 530 based on the height of the effective display area in the scanning direction (e.g., at a ratio of T2/T1 ratio or T1/T2). The head mounted device 500 may change the driving timing of the first display driving circuit 520 or the second display driving circuit 530 based on the position of the effective display area in the scanning direction, so as to match the scanning start time and end time of the first display panel 540 or the second display panel 550.

In an embodiment, the head mounted device 500 may change the luminance and/or sharpness of the first display panel 540 or the second display panel 550 based on the identified effective display area.

In an embodiment, when the effective display areas L and R of the first display panel 540 and the second display panel 550 are different due to enlargement or reduction of the screen displayed through the first display panel 540 or the second display panel 550 for correction of a size deviation, the head mounted device 500 may change the luminance and/or sharpness of the first display panel 540 or the second display panel 550 based on the effective display areas L and R of the first display panel 540 and the second display panel 550.

For example, when the effective display area R of the second display panel 550 is 90% of the effective display area L of the first display panel 540, the PPD (e.g., 27 ppd) of the second display panel 550 may be reduced to 90% of the PPD (e.g., 27 ppd) of the first display panel 540. Accordingly, the second display panel 550 may display an image in a smaller number of pixels, which may reduce a luminous intensity per unit solid angle [lm/sr] and cause blurring of an image. In an embodiment, the head mounted device 500 may increase the luminance and/or sharpness of the second display panel 550 to the reciprocal of a ratio between the effective display areas (e.g., a ratio of 100/90), relative to the luminance and/or sharpness of the first display panel 540.

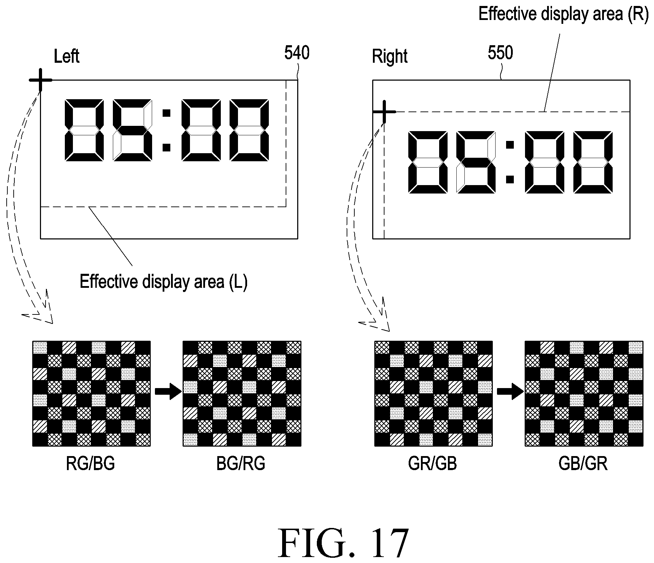

FIG. 17 illustrates sub-pixel rendering based on arrangement of sub-pixels according to an embodiment of the disclosure.

Referring to FIG. 17, the first display driving circuit 520 and/or the second display driving circuit 530 may change screen input data received from the processor 510 into a form transmittable to the first display panel 540 and/or the second display panel 550, and transmit the changed data (e.g., screen output data) to the display. In an embodiment, the changed data (e.g., output screen data) may be supplied in units of pixels or sub-pixels.

In an embodiment, the first display panel 540 and the second display panel 550 may include a plurality of pixels including sub-pixels. In an embodiment, a pixel is a structure in which red, green, and blue sub-pixels are arranged adjacent to each other in relation to display of specified colors, and one pixel may include RGB sub-pixels (an RGB stripe layout structure) or RGBG sub-pixels (a pentile layout structure). In an embodiment, the RGBG sub-pixel arrangement structure may be replaced with an RGGB sub-pixel arrangement structure. In an embodiment, a pixel may be replaced with an RGBW sub-pixel arrangement structure.

In an embodiment, the head mounted device 500 may change the effective display area L of the first display panel 540 or the effective display area R of the second display panel 550 on a pixel basis. In this case, since the same sub-pixel is included in each pixel, sub-pixel rendering may not be required.

In an embodiment, the head mounted device 500 may change the effective display area L of the first display panel 540 or the effective display area R of the second display panel 550 in units of sub-pixels. In this case, the arrangement of sub-pixels may be different between the effective display area L of the first display panel 540 and the effective display area R of the second display panel 550, and accordingly, a color representation scheme for an image at the same position from a reference point may be different. In an embodiment, the head mounted device 500 may perform sub-pixel rendering on screen input data based on the arrangement of sub-pixels included in an identified effective display area.

For example, as illustrated in FIG. 17, the effective display area L of the first display panel 540 may have a sub-pixel arrangement of RG/BG from the reference point, and the effective display area R of the second display panel 550 may have a sub-pixel arrangement of GR/GB from the reference point. In an embodiment, the head mounted device 500 may perform sub-pixel rendering on the screen input data, so that the effective display area L of the first display panel 540 may have a sub-pixel arrangement of BG/RG from the reference point, and the effective display area R of the second display panel 550 may have a sub-pixel arrangement of GB/GR from the reference point.

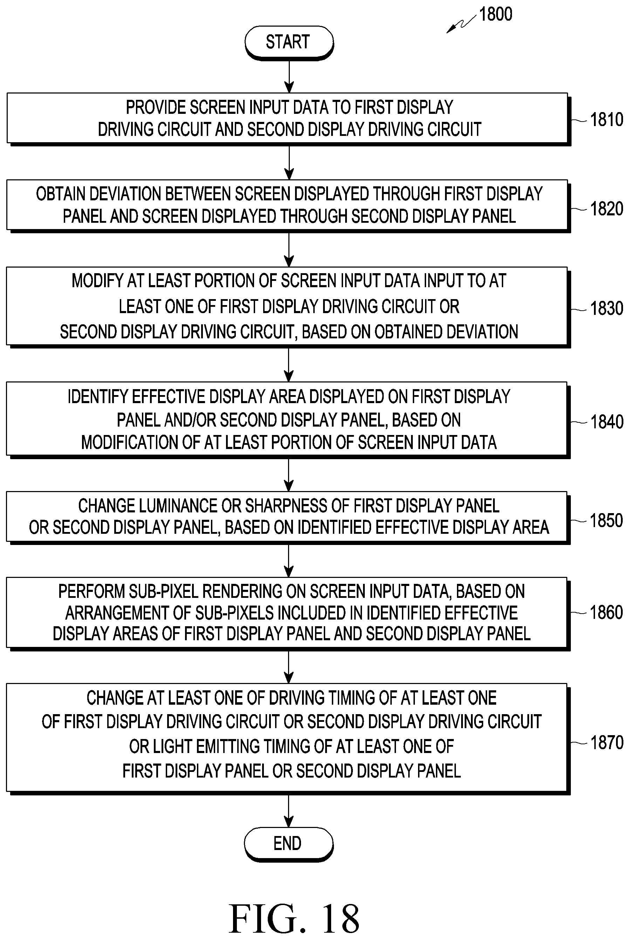

FIG. 18 is a flowchart illustrating a method 1800 of operating a head mounted device according to an embodiment of the disclosure.

Referring to FIG. 18, the head mounted device (e.g., the head mounted device 500 or the processor 510 of FIG. 5) according to an embodiment may provide screen input data to a first display driving circuit (e.g., the first display driving circuit 520 of FIG. 5) that drives a first display panel (e.g., the first display panel 540 of FIG. 5) and a second display driving circuit (e.g., the second display driving circuit 530 of FIG. 5) that drives a second display panel (e.g., the second display panel 550 of FIG. 5) in operation 1810. In an embodiment, the first display panel 540 and the second display panel 550 may display their respective screens based on screen output data provided by the first display driving circuit 520 and the second display driving circuit 530 based on the screen input data provided by the processor 510.

In an embodiment, the head mounted device 500 may obtain a deviation between the screen displayed through the first display panel 540 and the screen displayed through the second display panel 550 in operation 1820. In an embodiment, the head mounted device 500 may execute operation 1820 of obtaining the deviation between the screen displayed through the first display panel 540 and the screen displayed through the second display panel 550, based on a specific situation such as an update or booting of the head mounted device 500, or periodically according to a specified periodicity.

In an embodiment, as the first display driving circuit 520 and the second display driving circuit 530 may receive the same input data, the screen displayed through the first display panel 540 and the screen displayed through the second display panel 550 may be the same, or a positional deviation, a size deviation, and/or a rotational deviation may occur between the screens. According to an embodiment, the head mounted device 500 may obtain a positional deviation, size deviation, and/or rotational deviation between the screen displayed through the first display panel 540 and the screen displayed through the second display panel 550.

In an embodiment, the head mounted device 500 may receive, from an external device (e.g., a detection device), a deviation between the screen displayed through the first display panel 540 and the screen displayed through the second display panel 550, while displaying the screens on the first display panel 540 and the second display panel 550. In an embodiment, the head mounted device 500 may capture the screen displayed through the first display panel 540 and the screen displayed through the second display panel 550, or an image reflected from each screen, through a camera (e.g., the first camera module 251 of FIG. 2), and identify the deviation between the screen displayed through the first display panel 540 and the screen displayed through the second display panel 550 from the captured image or video.

According to an embodiment, the head mounted device 500 may modify at least a portion of the screen input data input to at least one of the first display driving circuit 520 or the second display driving circuit 530 based on the obtained deviation in operation 1830.

The head mounted device 500 according to an embodiment may identify an effective display area displayed on at least one of the first display panel 540 or the second display panel 550 based on the modification of the at least portion of the screen input data in operation 1840.

The head mounted device 500 according to an embodiment may change the luminance and/or sharpness of the first display panel 540 or the second display panel 550 based on the identified effective display area in operation 1850.

The head mounted device 500 according to an embodiment may perform sub-pixel rendering on the screen input data based on arrangement of sub-pixels included in the identified effective display areas of the first display panel 540 and the second display panel 550 in operation 1860.

In an embodiment, in operation 1870, the head mounted device 500 may change at least one of the driving timing of at least one of the first display driving circuit 520 or the second display driving circuit 530 or the light emitting timing of at least one of the first display panel 540 or the second display panel 550, based on the modification of the at least portion of the screen input data. In an embodiment, the head mounted device 500 may change the driving timing of the first display driving circuit 520 or the second display driving circuit 530, based on the identified effective display areas of the first display panel 540 and the second display panel 550.

In an embodiment, the head mounted device 500 may change the driving timing of the first display driving circuit 520 or the second display driving circuit 530 based on the identified effective display areas of the first display panel 540 and the second display panel 550 in operation 1820. In operation 1830, the head mounted device 500 may modify the screen input data input to at least one of the first display driving circuit 520 or the second display driving circuit 530, so that the screen displayed through the first display panel 540 or the screen displayed through the second display panel 550 is moved in parallel. In operation 1870, the head mounted device 500 may change at least one of the driving timing of at least one of the first display driving circuit 520 or the second display driving circuit 530 or the light emitting timing of at least one of the first display panel 540 or the second display panel 550, based on the parallel movement of the first display panel 540 or the second display panel 550 in the scanning direction.

In an embodiment, the head mounted device 500 may obtain a size deviation between the screen displayed through the first display panel 540 and the screen displayed through the second display panel 550 in operation 1820. The head mounted device 500 may modify the screen input data input to at least one of the first display driving circuit 520 or the second display driving circuit 530, so that the screen displayed through the first display panel 540 or the screen displayed through the second display panel 550 is enlarged or reduced in operation 1830. The head mounted device 500 may change at least one of the driving period of at least one of the first display driving circuit 520 or the second display driving circuit 530, or the light emitting period of at least one of the first display panel 540 or the second display panel 550, based on the enlargement or reduction of the first display panel 540 or the second display panel 550 in the scanning direction in operation 1870.

In an embodiment, the head mounted device 500 may obtain a rotational deviation between the screen displayed through the first display panel 540 and the screen displayed through the second display panel 550 in operation 1820. The head mounted device 500 may modify the screen input data input to at least one of the first display driving circuit 520 or the second display driving circuit 530, so that the screen displayed through the first display panel 540 or the screen displayed through the second display panel 550 is tilted or perspective-transformed in operation 1830.

The head mounted device 101, 200, 300, or 500 may include the first display panel 540 having a fixed position, the second display panel 550 having a fixed position, the first display driving circuit 520 driving the first display panel 540, the second display driving circuit 530 driving the second display panel 550, and the at least one processor 510, 513, or 515. The at least one processor 510, 513, or 515 may be configured to provide screen input data to the first display driving circuit 520 and the second display driving circuit 530. The at least one processor 510, 513, or 515 may be configured to, based on the provided screen input data, obtain a deviation between a screen displayed through the first display panel 540 and a screen displayed through the second display panel 550. The at least one processor 510, 513, or 515 may be configured to, based on the obtained deviation, modify at least a portion of the screen input data input to at least one of the first display driving circuit 520 or the second display driving circuit 530. The at least one processor 510, 513, or 515 may be configured to, based on the modification of the at least portion of the screen input data, change a light emitting timing of at least one of the first display panel 540 or the second display panel 550.

In the head mounted device 101, 200, 300, or 500 according to an embodiment, the first display panel 540 may display a screen to a user's left eye through the first optical system 560. In the head mounted device 101, 200, 300, or 500 according to an embodiment, the second display panel 550 may display a screen to the user's right eye through the second optical system 570.

In the head mounted device 101, 200, 300, or 500 according to an embodiment, the at least one processor 510, 513, or 515 may be configured to obtain a positional deviation on a plane between the screen displayed through the first display panel 540 and the screen displayed through the second display panel 550, as at least part of obtaining the deviation between the screen displayed through the first display panel 540 and the screen displayed through the second display panel 550. The at least one processor 510, 513, or 515 may be configured to modify the screen input data input to the at least one of the first display driving circuit 520 or the second display driving circuit 530 to move the screen displayed through the first display panel 540 or the screen displayed through the second display panel 550 in parallel, as at least part of modifying the at least portion of the screen input data.

In the head mounted device 101, 200, 300, or 500 according to an embodiment, the at least one processor 510, 513, or 515 may be configured to change the light emitting timing of the at least one of the first display panel 540 or the second display panel 550 based on parallel movement of the first display panel 540 or the second display panel 550 in a scanning direction, as at least part of changing the light emitting timing.

In the head mounted device 101, 200, 300, or 500 according to an embodiment, the at least one processor 510, 513, or 515 may be configured to obtain a size deviation between the screen displayed through the first display panel 540 and the screen displayed through the second display panel 550, as at least part of obtaining the deviation between the screen displayed through the first display panel 540 and the screen displayed through the second display panel 550. The at least one processor 510, 513, or 515 may be configured to modify the screen input data input to the at least one of the first display driving circuit 520 or the second display driving circuit 530 to enlarge or reduce the screen displayed through the first display panel 540 or the screen displayed through the second display panel 550, as at least part of modifying the at least portion of the screen input data.

In the head mounted device 101, 200, 300, or 500 according to an embodiment, the at least one processor 510, 513, or 515 may be configured to change the light emitting period of the at least one of the first display panel 540 or the second display panel 550, based on enlargement or reduction of the first display panel 540 or the second display panel 550 in the scanning direction, as at least part of changing the light emitting timing. In the head mounted device 101, 200, 300, or 500 according to an embodiment, the at least one processor 510, 513, or 515 may be configured to obtain a rotational deviation between the screen displayed through the first display panel 540 and the screen displayed through the second display panel 550, as at least part of obtaining the deviation between the screen displayed through the first display panel 540 and the screen displayed through the second display panel 550. The at least one processor 510, 513, or 515 may be configured to modify the screen input data input to the at least one of the first display driving circuit 520 or the second display driving circuit 530 to tilt or perspective-transform the screen displayed through the first display panel 540 or the screen displayed through the second display panel 550, as at least part of modifying the at least portion of the screen input data.

In the head mounted device 101, 200, 300, or 500 according to an embodiment, the at least one processor 510, 513, or 515 may be configured to identify an effective display area displayed on at least one of the first display panel 540 or the second display panel 550 based on the modification of the at least portion of the screen input data. The at least one processor 510, 513, or 515 may be configured to change the light emitting timing based on the identified effective display area, as at least part of changing the light emitting timing.

In the head mounted device 101, 200, 300, or 500 according to an embodiment, the at least one processor 510, 513, or 515 may be configured to change the light emitting timing of the at least one of the first display panel 540 or the second display panel 550 based on a height of the identified effective display area of the first display panel 540 or the second display panel 550 in the scanning direction, as at least part of changing the light emitting timing of the at least one of the first display panel 540 or the second display panel 550.

In the head mounted device 101, 200, 300, or 500 according to an embodiment, the at least one processor 510, 513, or 515 may be configured to change luminance or sharpness of the first display panel 540 or the second display panel 550 based on the identified effective display area.

In the head mounted device 101, 200, 300, or 500 according to an embodiment, the first display panel 540 and the second display panel 550 may include a plurality of pixels including sub-pixels. The at least one processor 510, 513, or 515 may be configured to identify effective display areas displayed on the first display panel 540 and the second display panel 550, respectively, based on the modification of the at least portion of the screen input data. The at least one processor 510, 513, or 515 may be configured to perform sub-pixel rendering on the screen input data, based on arrangement of sub-pixels included in the identified effective display areas of the first display panel 540 and the second display panel 550.

A method of operating the head mounted device 101, 200, 300, or 500 according to an embodiment may include providing 1810 screen input data to the first display driving circuit 520 driving the first display panel 540 and the second display driving circuit 530 driving the second display panel 550. The method of operating the head mounted device 101, 200, 300, or 500 according to an embodiment may include obtaining 1820 a deviation between a screen displayed through the first display panel 540 and a screen displayed through the second display panel 550. The method of operating the head mounted device 101, 200, 300, or 500 according to an embodiment may include, based on the obtained deviation, modifying 1830 at least a portion of the screen input data input to at least one of the first display driving circuit 520 or the second display driving circuit 530. The method of operating the head mounted device 101, 200, 300, or 500 according to an embodiment may include, based on the modification of the at least portion of the screen input data, changing 1870 a light emitting timing of at least one of the first display panel 540 or the second display panel 550.

In the method of operating the head mounted device 101, 200, 300, or 500 according to an embodiment, obtaining 1820 the deviation between the screen displayed through the first display panel 540 and the screen displayed through the second display panel 550 may include obtaining a positional deviation on a plane between the screen displayed through the first display panel 540 and the screen displayed through the second display panel 550. In the method of operating the head mounted device 101, 200, 300, or 500 according to an embodiment, modifying 1830 the at least portion of the screen input data may include modifying the screen input data input to the at least one of the first display driving circuit 520 or the second display driving circuit 530 to move the screen displayed through the first display panel 540 or the screen displayed through the second display panel 550 in parallel. In the method of operating the head mounted device 101, 200, 300, or 500 according to an embodiment, changing 1870 the light emitting timing may include changing the light emitting timing of the at least one of the first display panel 540 or the second display panel 550 based on parallel movement of the first display panel 540 or the second display panel 550 in a scanning direction.

In the method of operating the head mounted device 101, 200, 300, or 500 according to an embodiment, obtaining 1820 the deviation between the screen displayed through the first display panel 540 and the screen displayed through the second display panel 550 may include obtaining a size deviation between the screen displayed through the first display panel 540 and the screen displayed through the second display panel 550. In the method of operating the head mounted device 101, 200, 300, or 500 according to an embodiment, modifying 1830 the at least portion of the screen input data may include modifying the screen input data input to the at least one of the first display driving circuit 520 or the second display driving circuit 530 to enlarge or reduce the screen displayed through the first display panel 540 or the screen displayed through the second display panel 550. In the method of operating the head mounted device 101, 200, 300, or 500 according to an embodiment, changing 1870 the light emitting timing may include changing the light emitting period of the at least one of the first display panel 540 or the second display panel 550, based on enlargement or reduction of the first display panel 540 or the second display panel 550 in the scanning direction.

In the method of operating the head mounted device 101, 200, 300, or 500 according to an embodiment, obtaining 1820 the deviation between the screen displayed through the first display panel 540 and the screen displayed through the second display panel 550 may include obtaining a rotational deviation between the screen displayed through the first display panel 540 and the screen displayed through the second display panel 550. In the method of operating the head mounted device 101, 200, 300, or 500 according to an embodiment, modifying 1830 the at least portion of the screen input data may include modifying the screen input data input to the at least one of the first display driving circuit 520 or the second display driving circuit 530 to tilt or perspective-transform the screen displayed through the first display panel 540 or the screen displayed through the second display panel 550.

The method of operating the head mounted device 101, 200, 300, or 500 according to an embodiment may further include identifying 1840 an effective display area displayed on at least one of the first display panel 540 or the second display panel 550 based on the modification of the at least portion of the screen input data. In the method of operating the head mounted device 101, 200, 300, or 500 according to an embodiment, changing 1870 the light emitting timing may include changing the light emitting timing of the at least one of the first display panel 540 or the second display panel 550 based on a height of the identified effective display area of the first display panel 540 or the second display panel 550 in the scanning direction.

The method of operating the head mounted device 101, 200, 300, or 500 according to an embodiment may further include changing 1850 luminance or sharpness of the first display panel 540 or the second display panel 550 based on the identified effective display area.

The method of operating the head mounted device 101, 200, 300, or 500 according to an embodiment may further include identifying 1840 effective display areas displayed on the first display panel 540 and the second display panel 550, respectively, based on the modification of the at least portion of the screen input data. The method of operating the head mounted device 101, 200, 300, or 500 according to an embodiment may further include performing 1860 sub-pixel rendering on the screen input data, based on arrangement of sub-pixels included in the identified effective display areas of the first display panel 540 and the second display panel 550.

A non-transitory computer-readable storage medium storing at least one program according to an embodiment may include, based on execution of an application, providing 1810 screen input data to the first display driving circuit 520 driving the first display panel 540 and the second display driving circuit 530 driving the second display panel 550. The storage medium according to an embodiment may include obtaining 1820 a deviation between a screen displayed through the first display panel 540 and a screen displayed through the second display panel 550. The storage medium according to an embodiment may include, based on the obtained deviation, modifying 1830 at least a portion of the screen input data input to at least one of the first display driving circuit 520 or the second display driving circuit 530. The storage medium according to an embodiment may include, based on the modification of the at least portion of the screen input data, changing 1870 a light emitting timing of at least one of the first display panel 540 or the second display panel 550.

The head mounted device 101, 200, 300, or 500 may include the first display panel 540 having a fixed position, the second display panel 550 having a fixed position, the first display driving circuit 520 driving the first display panel 540, the second display driving circuit 530 driving the second display panel 550, and the at least one processor 510, 513, or 515. The at least one processor 510, 513, or 515 may be configured to provide screen input data to the first display driving circuit 520 and the second display driving circuit 530. The at least one processor 510, 513, or 515 may be configured to, based on the provided screen input data, obtain a deviation between a screen displayed through the first display panel 540 and a screen displayed through the second display panel 550. The at least one processor 510, 513, or 515 may be configured to, based on the obtained deviation, modify at least a portion of the screen input data input to at least one of the first display driving circuit 520 or the second display driving circuit 530. The at least one processor 510, 513, or 515 may be configured to, based on the modification of the at least portion of the screen input data, change a driving timing of at least one of the first display driving circuit 520 or the second display driving circuit 530.

In the head mounted device 101, 200, 300, or 500 according to an embodiment, the at least one processor 510, 513, or 515 may be configured to obtain a positional deviation on a plane between the screen displayed through the first display panel 540 and the screen displayed through the second display panel 550, as at least part of obtaining the deviation between the screen displayed through the first display panel 540 and the screen displayed through the second display panel 550. The at least one processor 510, 513, or 515 may be configured to modify the screen input data input to the at least one of the first display driving circuit 520 or the second display driving circuit 530 to move the screen displayed through the first display panel 540 or the screen displayed through the second display panel 550 in parallel, as at least part of modifying the at least portion of the screen input data. The at least one processor 510, 513, or 515 may be configured to change a timing of a vertical synchronization signal or the screen input data input to at least one of the first display driving circuit 520 or the second display driving circuit 530 or change a timing of a display period of at least one of the first display driving circuit 520 or the second display driving circuit 530, based on parallel movement of the first display panel 540 or the second display panel 550 in a scanning direction, as at least part of changing the driving timing.

In the head mounted device 101, 200, 300, or 500 according to an embodiment, the at least one processor 510, 513, or 515 may be configured to obtain a size deviation between the screen displayed through the first display panel 540 and the screen displayed through the second display panel 550, as at least part of obtaining the deviation between the screen displayed through the first display panel 540 and the screen displayed through the second display panel 550. The at least one processor 510, 513, or 515 may be configured to modify the screen input data input to the at least one of the first display driving circuit 520 or the second display driving circuit 530 to enlarge or reduce the screen displayed through the first display panel 540 or the screen displayed through the second display panel 550, as at least part of modifying the at least portion of the screen input data. The at least one processor 510, 513, or 515 may be configured to change a scanning speed or a clock speed of at least one of the display driving circuit 520 or the second display driving circuit 530 or change a period of the display period of at least one of the display driving circuit 520 or the second display driving circuit 530, based on enlargement or reduction of the first display panel 540 or the second display panel 550 in the scanning direction, as at least part of changing the driving timing.

A method of operating the head mounted device 101, 200, 300, or 500 according to an embodiment may include providing 1810 screen input data to the first display driving circuit 520 driving the first display panel 540 and the second display driving circuit 530 driving the second display panel 550. The method of operating the head mounted device 101, 200, 300, or 500 according to an embodiment may include obtaining 1820 a deviation between a screen displayed through the first display panel 540 and a screen displayed through the second display panel 550. The method of operating the head mounted device 101, 200, 300, or 500 according to an embodiment may include, based on the obtained deviation, modifying 1830 at least a portion of the screen input data input to at least one of the first display driving circuit 520 or the second display driving circuit 530. The method of operating the head mounted device 101, 200, 300, or 500 according to an embodiment may include, based on the modification of the at least portion of the screen input data, changing 1870 a driving timing of at least one of the first display driving circuit 520 or the second display driving circuit 530.

A non-transitory computer-readable storage medium storing at least one program according to an embodiment may include providing 1810 screen input data to the first display driving circuit 520 driving the first display panel 540 and the second display driving circuit 530 driving the second display panel 550. The storage medium according to an embodiment may include obtaining 1820 a deviation between a screen displayed through the first display panel 540 and a screen displayed through the second display panel 550. The storage medium according to an embodiment may include, based on the obtained deviation, modifying 1830 at least a portion of the screen input data input to at least one of the first display driving circuit 520 or the second display driving circuit 530. The storage medium according to an embodiment may include, based on the modification of the at least portion of the screen input data, changing 1870 a driving timing of at least one of the first display driving circuit 520 or the second display driving circuit 530.

The electronic device according to embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. A head mounted device (101; 200; 300; 500) comprising:
a first display panel (540) with a fixed position;
a second display panel (550) with a fixed position;
a first display driving circuit (520) configured to drive the first display panel (540);
a second display driving circuit (530) configured to drive the second display panel (550); and
at least one processor (510; 513, 515),
wherein the at least one processor (510; 513, 515) is configured to:
provide screen input data to the first display driving circuit (520) and the second display driving circuit (530),
based on the provided screen input data, obtain a deviation between a screen displayed through the first display panel (540) and a screen displayed through the second display panel (550),
based on the obtained deviation, modify at least a portion of the screen input data input to at least one of the first display driving circuit (520) or the second display driving circuit (530), and
based on the modification of the at least portion of the screen input data, change a light emitting timing of at least one of the first display panel (540) or the second display panel (550).

2. The head mounted device (101; 200; 300; 500) of claim 1, wherein the first display panel (540) is configured to display a screen to a user's left eye through a first optical system (560), and
wherein the second display panel (550) is configured to display a screen to the user's right eye through a second optical system (570).

3. The head mounted device (101; 200; 300; 500) of claim 1 or 2, wherein the at least one processor (510; 513, 515) is configured to:
obtain a positional deviation on a plane between the screen displayed through the first display panel (540) and the screen displayed through the second display panel (550), as at least part of obtaining the deviation between the screen displayed through the first display panel (540) and the screen displayed through the second display panel (550), and
modify the screen input data input to the at least one of the first display driving circuit (520) or the second display driving circuit (530) to move the screen displayed through the first display panel (540) or the screen displayed through the second display panel (550) in parallel, as at least part of modifying the at least portion of the screen input data.

4. The head mounted device (101; 200; 300; 500) of claim 3, wherein the at least one processor (510; 513, 515) is configured to change the light emitting timing of the at least one of the first display panel (540) or the second display panel (550) based on parallel movement of the first display panel (540) or the second display panel (550) in a scanning direction, as at least part of changing the light emitting timing.

5. The head mounted device (101; 200; 300; 500) of any one of claims 1 to 4, wherein the at least one processor (510; 513, 515) is configured to:
obtain a size deviation between the screen displayed through the first display panel (540) and the screen displayed through the second display panel (550), as at least part of obtaining the deviation between the screen displayed through the first display panel (540) and the screen displayed through the second display panel (550), and
modify the screen input data input to the at least one of the first display driving circuit (520) or the second display driving circuit (530) to enlarge or reduce the screen displayed through the first display panel (540) or the screen displayed through the second display panel (550), as at least part of modifying the at least portion of the screen input data.

6. The head mounted device (101; 200; 300; 500) of claim 5, wherein the at least one processor (510; 513, 515) is configured to change the light emitting period of the at least one of the first display panel (540) or the second display panel (550), based on enlargement or reduction of the first display panel (540) or the second display panel (550) in the scanning direction, as at least part of changing the light emitting timing.

7. The head mounted device (101; 200; 300; 500) of any one of claims 1 to 6, wherein the at least one processor (510; 513, 515) is configured to:
obtain a rotational deviation between the screen displayed through the first display panel (540) and the screen displayed through the second display panel (550), as at least part of obtaining the deviation between the screen displayed through the first display panel (540) and the screen displayed through the second display panel (550), and
modify the screen input data input to the at least one of the first display driving circuit (520) or the second display driving circuit (530) to tilt or perspective-transform the screen displayed through the first display panel (540) or the screen displayed through the second display panel (550), as at least part of modifying the at least portion of the screen input data.

8. The head mounted device (101; 200; 300; 500) of any one of claims 1 to 7, wherein the at least one processor (510; 513, 515) is configured to:
identify an effective display area displayed on at least one of the first display panel (540) or the second display panel (550) based on the modification of the at least portion of the screen input data, and
change the light emitting timing based on the identified effective display area, as at least part of changing the light emitting timing.

9. The head mounted device (101; 200; 300; 500) of claim 8, wherein the at least one processor (510; 513, 515) is configured to change the light emitting timing of the at least one of the first display panel (540) or the second display panel (550) based on a height of the identified effective display area of the first display panel (540) or the second display panel (550) in the scanning direction, as at least part of changing the light emitting timing of the at least one of the first display panel (540) or the second display panel (550).

10. The head mounted device (101; 200; 300; 500) of claim 8 or 9, wherein the at least one processor (510; 513, 515) is configured to change luminance or sharpness of the first display panel (540) or the second display panel (550) based on the identified effective display area.

11. The head mounted device (101; 200; 300; 500) of any one of claims 1 to 10, wherein the first display panel (540) and the second display panel (550) include a plurality of pixels including sub-pixels, and
wherein the at least one processor (510; 513, 515) is configured to:
identify effective display areas displayed on the first display panel (540) and the second display panel (550), respectively, based on the modification of the at least portion of the screen input data, and
perform sub-pixel rendering on the screen input data, based on arrangement of sub-pixels included in the identified effective display areas of the first display panel (540) and the second display panel (550).

12. A method of operating a head mounted device (101; 200; 300; 500), comprising:
providing (1810) screen input data to a first display driving circuit (520) configured to drive a first display panel (540) and a second display driving circuit (530) configured to drive a second display panel (550);
obtaining (1820) a deviation between a screen displayed through the first display panel (540) and a screen displayed through the second display panel (550);
based on the obtained deviation, modifying (1830) at least a portion of the screen input data input to at least one of the first display driving circuit (520) or the second display driving circuit (530); and
based on the modification of the at least portion of the screen input data, changing (1870) a light emitting timing of at least one of the first display panel (540) or the second display panel (550).

13. The method of claim 12, wherein obtaining (1820) the deviation between the screen displayed through the first display panel (540) and the screen displayed through the second display panel (550) includes obtaining a positional deviation on a plane between the screen displayed through the first display panel (540) and the screen displayed through the second display panel (550),
wherein the modifying (1830) of the at least portion of the screen input data includes modifying the screen input data input to the at least one of the first display driving circuit (520) or the second display driving circuit (530) to move the screen displayed through the first display panel (540) or the screen displayed through the second display panel (550) in parallel, and
wherein the changing (1870) of the light emitting timing includes changing the light emitting timing of the at least one of the first display panel (540) or the second display panel (550) based on parallel movement of the first display panel (540) or the second display panel (550) in a scanning direction.

14. The method of 12 or 13, wherein obtaining (1820) the deviation between the screen displayed through the first display panel (540) and the screen displayed through the second display panel (550) includes obtaining a size deviation between the screen displayed through the first display panel (540) and the screen displayed through the second display panel (550),
wherein the modifying (1830) of the at least portion of the screen input data includes modifying the screen input data input to the at least one of the first display driving circuit (520) or the second display driving circuit (530) to enlarge or reduce the screen displayed through the first display panel (540) or the screen displayed through the second display panel (550), and
wherein the changing (1870) of the light emitting timing includes changing the light emitting period of the at least one of the first display panel (540) or the second display panel (550), based on enlargement or reduction of the first display panel (540) or the second display panel (550) in the scanning direction.

15. The method of any one of claims 12 to 14, wherein obtaining (1820) the deviation between the screen displayed through the first display panel (540) and the screen displayed through the second display panel (550) includes obtaining a rotational deviation between the screen displayed through the first display panel (540) and the screen displayed through the second display panel (550), and
wherein the modifying (1830) of the at least portion of the screen input data includes modifying the screen input data input to the at least one of the first display driving circuit (520) or the second display driving circuit (530) to tilt or perspective-transform the screen displayed through the first display panel (540) or the screen displayed through the second display panel (550).
